# EUROPEAN PATENT SPECIFICATION

(11) **EP 4 542 366 B1**
(45) Date of publication and mention of the grant of the patent: **23.09.2026**
(21) Application number: 23829692.5
(22) Date of filing: 04.05.2023
(51) Int. Cl.: G06F 1/16, G06F 3/14

(54) **DISPLAY METHOD AND ELECTRONIC DEVICE**
ANZEIGEVERFAHREN UND ELEKTRONISCHE VORRICHTUNG
PROCÉDÉ D'AFFICHAGE ET DISPOSITIF ÉLECTRONIQUE

(30) Priority: 30.06.2022 CN 202210760138
(43) Date of publication of application: 23.04.2025
(73) Proprietor: Honor Device Co., Ltd., Shenzhen, Guangdong 518040 (CN)
(72) Inventor: ZHANG, Cheng, Shenzhen, Guangdong 518040 (CN); LI, Danhong, Shenzhen, Guangdong 518040 (CN); DI, Haoxuan, Shenzhen, Guangdong 518040 (CN)
(74) Representative: MERH-IP Matias Erny Reichl Hoffmann Patentanwälte PartG mbB
(86) International application number: PCT/CN2023/091972
(87) International publication number: WO 2024/001506

(56) References cited:
- WO-A1-2018/090575
- CN-A- 110 620 833
- CN-A- 112 860 359
- CN-A- 113 031 894
- CN-A- 113 268 196
- CN-A- 113 268 196
- CN-A- 115 686 407
- US-A1- 2015 116 364
- US-A1- 2021 247 805

## Description

### TECHNICAL FIELD

This invention relates to the field of terminals, and specifically, to a display method and an electronic device.

### BACKGROUND

With popularization and rapid development of intelligent electronic devices, the electronic devices have various diversified functions and structures, for example, a foldable electronic device. The foldable electronic device has bendable characteristics and can be used in a plurality of forms. Use forms of the foldable electronic device may be divided into an unfolded state, a half-folded state, and a fully folded state in descending order of a folding angle of the foldable electronic device. However, currently, for the foldable electronic device in a variable attitude, a display direction of a display interface of the foldable electronic device is determined mainly based on data of a primary display screen of the foldable electronic device during use. In some scenarios, a display direction of a display picture cannot be accurately adjusted, and consequently, the foldable electronic device cannot meet users' use requirements in different scenarios.

Therefore, how to self-adaptively adjust a display direction of a display screen based on various attitudes of the foldable electronic device has become an urgent problem to be resolved.

US2015/116364A1 discloses determining a relative orientation of the first integrated display device to the second integrated display device based on an orientation of the first display and movement data or differences in reference point data from the second display screen, and restricting power usage to the first or second integrated display device based on the determined relative orientation and a working software CN113268196A discloses determining a flexible screen in an extended state or a stand state when the angle between a first screen and a second screen lies within a preset closed interval and the first screen and the second screen are in landscape orientation, determining operational and non-operational controls within a first interface, and displaying a second interface including operational controls on the first screen and displaying and a third interface including non-operational controls on the second screen.

### SUMMARY

This invention provides a display method and an electronic device, which can ensure that a foldable electronic device can meet users' use requirements in various scenarios, thereby improving user experience.

The invention is defined in the independent claims.

Preferred embodiments are defined in the dependent claims.

Optionally, the first direction may include a portrait display direction, a landscape left display direction, a landscape right display direction, a reverse portrait display direction, or the like. Similarly, the second direction may be an arrangement direction of content information displayed in the second display screen. The third direction may be an arrangement direction that is of content information displayed in the first display screen and the second display screen and that is obtained based on the information about the folding angle, the first direction, and the second direction.

In embodiments of this application, the foldable electronic device may include the first display screen and the second display screen. The first display screen corresponds to the first motion sensor, and the second display screen corresponds to a second sensor. It may be obtained, based on the first data acquired by the first motion sensor, that the direction of the interface displayed by the first display screen is the first direction. It may be obtained, based on the second data acquired by the second motion sensor, that the direction of the interface displayed by the second display screen is the second direction. It may be obtained, based on the information about the folding angle between the first display screen and the second display screen, the first direction, and the second direction, that the direction of each of the interfaces displayed by the first display screen and the second display screen of the foldable electronic device is the third direction. The first display screen and/or the second display screen displays the interface based on the third direction. Compared with determining a display direction of the foldable electronic device based on data acquired by a motion sensor of a primary display screen of the foldable electronic device, in this solution, the third direction of each of the interfaces displayed by the first display screen and the second display screen of the foldable electronic device is determined based on data acquired by a motion sensor corresponding to each display screen of the foldable electronic device and the folding angle between the first display screen and the second display screen, so that the display method in this solution can ensure that the foldable electronic device can meet users' use requirements in various scenarios, thereby improving user experience.

Optionally, the first display screen may be a display screen preconfigured in the foldable electronic device, or the first display screen may be a display screen that is in the foldable electronic device and that includes an external camera.

In a possible implementation, the first motion sensor may include one or more of an acceleration sensor, a gyro sensor, or a Hall sensor.

In a possible implementation, the second motion sensor may include one or more of the acceleration sensor, the gyro sensor, or the Hall sensor.

In a possible implementation, the direction may include the first direction, the second direction, or the third direction. The direction may include any one of the following:
the portrait display direction, the landscape left display direction, the reverse portrait display direction, or the landscape right display direction. When the foldable electronic device is in the portrait display direction, a charging port of the foldable electronic device is downward. When the foldable electronic device is in the landscape left display direction, the charging port of the foldable electronic device is rightward. When the foldable electronic device is in the reverse portrait display direction, the charging port of the foldable electronic device is upward. When the foldable electronic device is in the landscape right display direction, the charging port of the foldable electronic device is leftward.

With reference to the first aspect, in some implementations of the first aspect, the obtaining a third direction based on the information about the folding angle, the first direction, and the second direction includes:
determining a current attitude of the foldable electronic device based on the information about the folding angle, where the current attitude is used for indicating a current unfolded state or folded state of the foldable electronic device; and
obtaining the third direction based on the current attitude, the first direction, and the second direction.

In this embodiment of this application, the current attitude of the foldable electronic device may be determined based on the folding angle between the first display screen and the second display screen. The direction of each of the interfaces displayed by the first display screen and the second display screen of the foldable electronic device may be determined based on the current attitude of the foldable electronic device, to ensure that the foldable electronic device can meet users' use requirements in various scenarios, thereby improving user experience.

With reference to the first aspect, in some implementations of the first aspect, the determining a current attitude of the foldable electronic device based on the information about the folding angle includes:
determining that the current attitude is a folded attitude when the folding angle is less than or equal to a first preset threshold;
determining that the current attitude is an intermediate attitude when the folding angle is less than or equal to a second preset threshold, where the intermediate attitude is used for indicating an instantaneous attitude of the foldable electronic device, and the second preset threshold is greater than the first preset threshold; and
determining that the current attitude is a first unfolded attitude when the folding angle is in a first preset range and the first display screen is in a horizontal state.

In this embodiment of this application, the current attitude of the foldable electronic device may be determined based on the folding angle between the first display screen and the second display screen. For example, the current attitude of the foldable electronic device may be determined based on a value of the folding angle, and the direction of each of the interfaces displayed by the first display screen and the second display screen of the foldable electronic device may be determined based on the current attitude of the foldable electronic device, to ensure that the foldable electronic device can meet users' use requirements in various scenarios, thereby improving user experience.

With reference to the first aspect, in some implementations of the first aspect, the folding angle is an included angle that is between the first display screen and the second display screen and that is obtained at a moment t, and the determining that the current attitude is a first unfolded attitude when the folding angle is in a first preset range and the first display screen is in a horizontal state includes:
obtaining a first data set, where the first data frame set includes the included angle that is between the first display screen and the second display screen and that is obtained at the moment t; and
determining that the current attitude is the first unfolded attitude when the included angle in the first data set is in the first preset range, and the first display screen is in the horizontal state.

In this embodiment of this application, when the current attitude of the foldable electronic device is determined based on the folding angle between the first display screen and the second display screen, to ensure accuracy of the current attitude, a plurality of frames of information about the folding angle may be obtained, and the current attitude of the foldable electronic device is determined when a plurality of frames of data meets a condition, to effectively avoid a problem of low accuracy of recognizing the current attitude of the foldable electronic device due to mistaken touch, thereby improving accuracy of the current attitude.

With reference to the first aspect, in some implementations of the first aspect, the method further includes:
determining that the current attitude is a second unfolded attitude when the folding angle is less than or equal to a third preset threshold, where the third preset threshold is greater than the first preset threshold and less than the second preset threshold.

With reference to the first aspect, in some implementations of the first aspect, the folding angle is the included angle that is between the first display screen and the second display screen and that is obtained at the moment t, and the determining that the current attitude is a second unfolded attitude when the folding angle is less than or equal to a third preset threshold includes:
obtaining a second data set, where the second data frame set includes the included angle that is between the first display screen and the second display screen and that is obtained at the moment t; and
determining that the current attitude is the second unfolded attitude when the included angle in the second data set is less than or equal to the third preset threshold.

In this embodiment of this application, when the current attitude of the foldable electronic device is determined based on the folding angle between the first display screen and the second display screen, to ensure accuracy of the current attitude, a plurality of frames of information about the folding angle may be obtained, and the current attitude of the foldable electronic device is determined when a plurality of frames of data meets a condition, to effectively avoid a problem of low accuracy of recognizing the current attitude of the foldable electronic device due to mistaken touch, thereby improving accuracy of the current attitude.

With reference to the first aspect, in some implementations of the first aspect, the first display screen is a primary display screen of the foldable electronic device, and when the current attitude is the folded attitude, the third direction is the same as the first direction.

In a possible implementation, the first display screen is the primary display screen of the foldable electronic device, and if the current attitude of the foldable electronic device is the folded attitude, the third direction is the same as the first direction.

In this embodiment of this application, if the foldable electronic device is in the folded attitude, a direction of any display screen may be used as the direction of each of the interfaces displayed by the first display screen and the second display screen of the foldable electronic device. For example, if the foldable electronic device is in the folded attitude, the first direction of the primary display screen may be set as the direction of each of the interfaces displayed by the first display screen and the second display screen of the foldable electronic device, that is, the third direction is the same as the first direction.

With reference to the first aspect, in some implementations of the first aspect, the first data, the second data, and the information about the folding angle are data obtained at the moment t, and when the current attitude is the intermediate attitude, the third direction is a historical direction, where the historical direction is a direction that is of the interfaces displayed by the first display screen and the second display screen and that is obtained based on data obtained at a moment t-1.

It is to be understood that, the intermediate attitude may be an intermediate attitude in transition from the second unfolded attitude (for example, a tent state) to the first unfolded attitude (for example, a notebook state), and the attitude is an instantaneous attitude at a short time.

In a possible implementation, if the current attitude of the foldable electronic device is the intermediate attitude, the third direction is the same as the historical direction.

In a possible implementation, if it is obtained, based on the first data, the second data, and the information about the folding angle that are obtained at the moment t-1, that the third direction at the moment t-1 is a direction A, it is determined, based on angle information obtained at the moment t, that the current attitude of the foldable electronic device is the intermediate attitude, and the third direction at the moment t may be the direction A.

With reference to the first aspect, in some implementations of the first aspect, the first display screen is a primary display screen of the foldable electronic device, and when the current attitude is the first unfolded attitude, the third direction is the same as the second direction.

In a possible implementation, when the current attitude of the foldable electronic device is the first unfolded attitude, the interfaces displayed by the first display screen and the second display screen may be related or independent.

For example, the first unfolded attitude may mean that the foldable electronic device is in the notebook state. When the foldable electronic device is in the notebook state, the first display screen may display a main interface (for example, a home screen), and the second display screen may display a display interface on which an application is currently run.

In a possible implementation, if the current attitude of the foldable electronic device is the notebook state, the third direction is the same as the second direction.

In this embodiment of this application, the first unfolded attitude may be the notebook state. When the current attitude of the foldable electronic device is the notebook state and the primary display screen of the foldable electronic device is in the horizontal state, because the motion sensor of the primary display screen cannot acquire valid data, in this case, the direction of the interface displayed by the second display screen may be used as the display direction of the foldable electronic device.

With reference to the first aspect, in some implementations of the first aspect, the first display screen is a primary display screen of the foldable electronic device, and when the current attitude is the second unfolded attitude, the third direction is the same as the second direction.

In a possible implementation, if the current attitude of the foldable electronic device is the tent state, the third direction is the same as the second direction.

In this embodiment of this application, when the foldable electronic device is in the tent state, an outer screen of the foldable electronic device can perform display. Generally, the outer screen and a secondary display screen of the foldable electronic device are usually located on two different sides of one surface, and in this case, the second direction obtained based on second data of the secondary display screen may be used as the direction of each of the interfaces displayed by the first display screen and the second display screen of the foldable electronic device, that is, the third direction is the same as the second direction.

With reference to the first aspect, in some implementations of the first aspect, the method further includes:
when the folding angle is not in the first preset range, if a tag value of the first direction is greater than or equal to a tag value of the second direction, the third direction is the same as the first direction; or
if a tag value of the first direction is less than a tag value of the second direction, the third direction is the same as the second direction.

In a possible implementation, if the folding angle is beyond the first preset range, the third direction may be determined based on the tag value of the first direction and the tag value of the second direction.

In this embodiment of this application, when the folding angle is not in a first range, the tag value of the first direction and the tag value of the second direction may be compared, to further output a valid third direction.

With reference to the first aspect, in some implementations of the first aspect, the method further includes:
storing the third direction.

In this embodiment of this application, information about the third direction is stored to determine whether there is a need to adjust the display interface of the interface displayed by the foldable electronic device during subsequent determining. For example, if a third direction obtained based on data obtained at a moment before a current moment is the direction A (for example, the portrait display direction), and a third direction obtained based on data obtained at the current moment is also the direction A, the interface displayed by the foldable electronic device may remain unchanged, that is, the foldable electronic device may not adjust the display direction of the interface that is displayed. If the third direction obtained based on the data at the moment before the current moment is the direction A (for example, the portrait display direction), and the third direction obtained based on the data obtained at the current moment is a direction B (for example, the landscape left display direction), the foldable electronic device needs to adjust the display direction of the interface displayed by the foldable electronic device. Alternatively, when an invalid state is outputted by using a rotation direction recognition algorithm, the information about the stored direction needs to be obtained. For example, when a next frame of data of a current frame is processed based on a display direction recognition algorithm, an output is an invalid state (for example, an invalid value or a flat-lying attitude is outputted). In this case, the direction of the interface displayed by the foldable electronic device is a historical display direction obtained from the stored direction. In other words, when an output obtained by the foldable electronic device based on the rotation direction recognition algorithm is the invalid state, the direction of the interface displayed by the foldable electronic device may be the historical display direction, and the foldable electronic device may not change the display direction of the interface that is displayed.

With reference to the first aspect, the displaying, by the first display screen and/or the second display screen, the interface based on the third direction includes:
displaying, by the first display screen and the second display screen, the interfaces based on the third direction.

In this embodiment of this application, the third direction is a direction used for indicating the interfaces displayed by the first display screen and the second display screen. When both the first display screen and the second display screen enable a screen rotation function, the first display screen and the second display screen may display the interfaces based on the third direction. In this case, the direction of the interface displayed by the first display screen is the same as the direction of the interface displayed by the second display screen.

With reference to the first aspect, the displaying, by the first display screen and the second display screen, the interfaces based on the third direction includes:
detecting a first operation on the first display screen, where the first operation is an operation for instructing the first display screen to enable screen rotation;
displaying, by the first display screen in response to the first operation, the interface based on the third direction;
detecting a second operation on the second display screen, where the second operation is an operation for instructing the second display screen to enable screen rotation; and
displaying, by the second display screen in response to the second operation, the interface based on the third direction.

In this embodiment of this application, the first display screen and the second display screen may be separately controlled. In other words, a control for enabling screen rotation in the first display screen and a control for enabling screen rotation in the second display screen may be respectively configured. The first display screen and the second display screen may display the interfaces based on the third direction when an operation of tapping the control for enabling screen rotation in the first display screen and an operation of tapping the control for enabling screen rotation in the second display screen are detected.

Optionally, the first operation and the second operation may be operations successively performed in a chronological order, or may be operations simultaneously performed.

With reference to the first aspect, the displaying, by the first display screen and the second display screen, the interfaces based on the third direction includes:
detecting a third operation on the first display screen, where the third operation is an operation of instructing the first display screen and the second display screen to enable screen rotation; and
displaying, by the first display screen and the second display screen in response to the third operation, the interfaces based on the third direction.

In this embodiment of this application, overall control may be performed on the first display screen and the second display screen, that is, a control may be configured to implement a function for enabling/disabling the first display screen and the second display screen, thereby improving convenience of operations.

In a possible implementation direction, the displaying, by the first display screen and/or the second display screen, the interface based on the third direction includes:
displaying, by the first display screen, the interface based on the third direction; or displaying, by the second display screen, the interface based on the third direction.

In a possible implementation direction, when the first display screen enables the screen rotation function and the second display screen does not enable the screen rotation function, the first display screen may display the interface based on the third direction, and the second display screen may display the interface based on the historical direction, that is, the direction of the interface displayed by the second display screen may remain unchanged.

In a possible implementation direction, when the first display screen enables the screen rotation function and the second display screen does not enable the screen rotation function, the first display screen may display the interface based on the third direction, and the second display screen may display the interface based on the historical direction, that is, the direction of the interface displayed by the second display screen may remain unchanged.

In a possible implementation direction, when the second display screen enables the screen rotation function and the first display screen does not enable the screen rotation function, the second display screen may display the interface based on the third direction, and the first display screen may display the interface based on the historical direction, that is, the direction of the interface displayed by the first display screen may remain unchanged.

With reference to the first aspect, in some implementations of the first aspect, that the first data, the second data, and the information about the folding angle are data obtained at the moment t further includes:
obtaining interface display data at the moment t-1; and
the displaying, by the first display screen and/or the second display screen, the interface based on the third direction includes:
   displaying, by the first display screen and/or the second display screen, the interface based on the interface display data at the moment t-1 and the third direction.

In this embodiment of this application, interface display data at a previous moment of a current moment may be obtained. When the interface is displayed at the current moment, interface rendering may be implemented based on the interface display data and the third direction, thereby effectively reducing power consumption of the foldable electronic device.

With reference to the first aspect, in some implementations of the first aspect, the obtaining a first direction based on the first data includes:
processing the first data by using a rotation direction recognition algorithm, to obtain the first direction.

With reference to the first aspect, in some implementations of the first aspect, the obtaining a second direction based on the second data includes:
processing the second data by using the rotation direction recognition algorithm, to obtain the second direction.

According to a second aspect, an electronic device is provided, including a module/unit configured to perform the first aspect and any display method in the first aspect.

According to a third aspect, an electronic device is provided, including one or more processors, a memory, a first display screen, a second display screen, a first motion sensor, and a second motion sensor. The memory is coupled to the one or more processors, the memory is configured to store computer program code, the computer program code including computer instructions, and the one or more processors invoke the computer instructions to enable the electronic device to perform the following steps:
obtaining first data, second data, and information about a folding angle, where the first data is data of the first display screen acquired by the first motion sensor, the second data is data of the second display screen acquired by the second motion sensor, and the folding angle is an included angle between the first display screen and the second display screen;
obtaining a first direction based on the first data, where the first direction is a direction of an interface displayed by the first display screen;
obtaining a second direction based on the second data, where the second direction is a direction of an interface displayed by the second display screen;
obtaining a third direction based on the information about the folding angle, the first direction, and the second direction, where the third direction is a direction of each of the interfaces displayed by the first display screen and the second display screen; and
displaying, by the first display screen and/or the second display screen, the interface based on the third direction.

With reference to the third aspect, in some implementations of the third aspect, the one or more processors invoke the computer instructions to enable the electronic device to perform the following steps:
With reference to the third aspect, in some implementations of the third aspect, the obtaining a third direction based on the information about the folding angle, the first direction, and the second direction includes:
determining a current attitude of the foldable electronic device based on the information about the folding angle, where the current attitude is used for indicating a current unfolded state or folded state of the foldable electronic device; and
obtaining the third direction based on the current attitude, the first direction, and the second direction.

With reference to the third aspect, in some implementations of the third aspect, the one or more processors invoke the computer instructions to enable the electronic device to perform the following steps:
determining that the current attitude is a folded attitude when the folding angle is less than or equal to a first preset threshold;
determining that the current attitude is an intermediate attitude when the folding angle is less than or equal to a second preset threshold, where the intermediate attitude is used for indicating an instantaneous attitude of the foldable electronic device, and the second preset threshold is greater than the first preset threshold; and
determining that the current attitude is a first unfolded attitude when the folding angle is in a first preset range and the first display screen is in a horizontal state.

With reference to the third aspect, in some implementations of the third aspect, the folding angle is an included angle that is between the first display screen and the second display screen and that is obtained at a moment t, and the one or more processors invoke the computer instructions to enable the electronic device to perform the following steps:
obtaining a first data set, where the first data frame set includes the included angle that is between the first display screen and the second display screen and that is obtained at the moment t; and
determining that the current attitude is the first unfolded attitude when the included angle in the first data set is in the first preset range, and the first display screen is in the horizontal state.

With reference to the third aspect, in some implementations of the third aspect, the one or more processors invoke the computer instructions to enable the electronic device to perform the following steps:
determining that the current attitude is a second unfolded attitude when the folding angle is less than or equal to a third preset threshold, where the third preset threshold is greater than the first preset threshold and less than the second preset threshold.

With reference to the third aspect, in some implementations of the third aspect, the folding angle is an included angle that is between the first display screen and the second display screen and that is obtained at a moment t, and the one or more processors invoke the computer instructions to enable the electronic device to perform the following steps:
obtaining a second data set, where the second data frame set includes the included angle that is between the first display screen and the second display screen and that is obtained at the moment t; and
determining that the current attitude is the second unfolded attitude when the included angle in the second data set is less than or equal to the third preset threshold.

With reference to the third aspect, in some implementations of the third aspect, the first display screen is a primary display screen of the foldable electronic device, and when the current attitude is the folded attitude, the third direction is the same as the first direction.

With reference to the third aspect, in some implementations of the third aspect, the first data, the second data, and the information about the folding angle are data obtained at the moment t, and when the current attitude is the intermediate attitude, the third direction is a historical direction, where the historical direction is a direction that is of the interfaces displayed by the first display screen and the second display screen and that is obtained based on data obtained at a moment t-1.

With reference to the third aspect, in some implementations of the third aspect, the first display screen is a primary display screen of the foldable electronic device, and when the current attitude is the first unfolded attitude, the third direction is the same as the second direction.

With reference to the third aspect, in some implementations of the third aspect, the first display screen is a primary display screen of the foldable electronic device, and when the current attitude is the second unfolded attitude, the third direction is the same as the second direction.

With reference to the third aspect, in some implementations of the third aspect, the one or more processors invoke the computer instructions to enable the electronic device to perform the following steps:
when the folding angle is not in the first preset range, if a tag value of the first direction is greater than or equal to a tag value of the second direction, the third direction is the same as the first direction; or
if a tag value of the first direction is less than a tag value of the second direction, the third direction is the same as the second direction.

With reference to the third aspect, in some implementations of the third aspect, the one or more processors invoke the computer instructions to enable the electronic device to perform the following steps:
storing the third direction.

With reference to the third aspect, in some implementations of the third aspect, the one or more processors invoke the computer instructions to enable the electronic device to perform the following steps:
displaying, by the first display screen and the second display screen, the interfaces based on the third direction.

With reference to the third aspect, in some implementations of the third aspect, the one or more processors invoke the computer instructions to enable the electronic device to perform the following steps:
detecting a first operation on the first display screen, where the first operation is an operation for instructing the first display screen to enable screen rotation;
displaying, by the first display screen in response to the first operation, the interface based on the third direction;
detecting a second operation on the second display screen, where the second operation is an operation for instructing the second display screen to enable screen rotation; and
displaying, by the second display screen in response to the second operation, the interface based on the third direction.

With reference to the third aspect, in some implementations of the third aspect, the one or more processors invoke the computer instructions to enable the electronic device to perform the following steps:
detecting a third operation on the first display screen, where the third operation is an operation of instructing the first display screen and the second display screen to enable screen rotation; and
displaying, by the first display screen and the second display screen in response to the third operation, the interfaces based on the third direction.

With reference to the third aspect, in some implementations of the third aspect, the one or more processors invoke the computer instructions to enable the electronic device to perform the following steps:
obtaining interface display data at the moment t-1; and
the displaying, by the first display screen and/or the second display screen, the interface based on the third direction includes:
   displaying, by the first display screen and/or the second display screen, the interface based on the interface display data at the moment t-1 and the third direction.

With reference to the third aspect, in some implementations of the third aspect, the one or more processors invoke the computer instructions to enable the electronic device to perform the following steps:
processing the first data by using a rotation direction recognition algorithm, to obtain the first direction.

With reference to the third aspect, in some implementations of the third aspect, the one or more processors invoke the computer instructions to enable the electronic device to perform the following steps:
processing the second data by using the rotation direction recognition algorithm, to obtain the second direction.

According to a fourth aspect, an electronic device is provided. The electronic device includes one or more processors and a memory. The memory is coupled to the one or more processors, the memory is configured to store computer program code, the computer program code including computer instructions, and the one or more processors invoke the computer instructions to enable the electronic device to execute the first aspect and any display method in the first aspect.

According to a fifth aspect, a chip system is provided, applied to an electronic device. The chip system includes one or more processors. The processors are configured to invoke computer instructions to enable the electronic device to execute the first aspect and any display method in the first aspect.

According to a sixth aspect, a computer-readable storage medium is provided, storing computer program code, the computer program code, when run on an electronic device, enabling the electronic device to execute the first aspect and any display method in the first aspect.

According to a seventh aspect, a computer program product is provided. The computer program product includes computer program code, the computer program code, when run on an electronic device, enabling the electronic device to execute the first aspect and any display method in the first aspect.

In embodiments of this application, the foldable electronic device may include the first display screen and the second display screen. The first display screen corresponds to the first motion sensor, and the second display screen corresponds to a second sensor. It may be obtained, based on the first data acquired by the first motion sensor, that the direction of the interface displayed by the first display screen is the first direction. It may be obtained, based on the second data acquired by the second motion sensor, that the direction of the interface displayed by the second display screen is the second direction. It may be obtained, based on the information about the folding angle between the first display screen and the second display screen, the first direction, and the second direction, that the direction of each of the interfaces displayed by the first display screen and the second display screen of the foldable electronic device is the third direction. The first display screen and/or the second display screen displays the interface based on the third direction. Compared with determining a display direction of the foldable electronic device based on data acquired by a motion sensor of a primary display screen of the foldable electronic device, in this solution, the direction of each of the interfaces displayed by the first display screen and the second display screen of the foldable electronic device, that is, the third direction is determined based on data acquired by a motion sensor corresponding to each display screen of the foldable electronic device and a folding angle between display screens, so that the display method in this solution can ensure that the foldable electronic device can meet users' use requirements in various scenarios, thereby improving user experience.

### BRIEF DESCRIPTION OF DRAWINGS

FIG. 1 is a schematic diagram of a hardware system of an electronic device applicable to this application;
FIG. 2 is a schematic diagram of a software system of an electronic device applicable to this application;
FIG. 3 is a schematic diagram of a foldable electronic device according to an embodiment of this application;
FIG. 4 is a schematic diagram of different attitudes of a foldable electronic device according to an embodiment of this application;
FIG. 5 is a schematic diagram of a foldable electronic device in a notebook state according to an embodiment of this application;
FIG. 6 is a schematic diagram of a foldable electronic device in a notebook state according to an embodiment of this application;
FIG. 7 is a schematic diagram of a foldable electronic device in a tent state according to an embodiment of this application;
FIG. 8 is a schematic flowchart of a display method according to an embodiment of this application;
FIG. 9 is a schematic diagram of directions of an interface displayed by a display screen according to an embodiment of this application;
FIG. 10 is a schematic diagram of directions of an interface displayed by a display screen according to an embodiment of this application;
FIG. 11 is a schematic flowchart of another display method according to an embodiment of this application;
FIG. 12 is a schematic flowchart of another display method according to an embodiment of this application;
FIG. 13 is a schematic flowchart of a rotation direction recognition method according to an embodiment of this application;
FIG. 14 is a schematic diagram of an inclination angle or a rotation angle of a foldable electronic device according to an embodiment of this application;
FIG. 15 is a schematic diagram of a graphical user interface according to an embodiment of this application;
FIG. 16 is a schematic diagram of another graphical user interface according to an embodiment of this application;
FIG. 17 is a schematic diagram of another graphical user interface according to an embodiment of this application;
FIG. 18 is a schematic diagram of another graphical user interface according to an embodiment of this application;
FIG. 19 is a schematic diagram of a foldable electronic device from a folded state to a notebook state according to an embodiment of this application;
FIG. 20 is a schematic diagram of a graphical user interface according to an embodiment of this application;
FIG. 21 is a schematic diagram of another graphical user interface according to an embodiment of this application;
FIG. 22 is a schematic diagram of another graphical user interface according to an embodiment of this application;
FIG. 23 is a schematic structural diagram of an electronic device according to an embodiment of this application; and
FIG. 24 is a schematic structural diagram of an electronic device according to an embodiment of this application.

### DESCRIPTION OF EMBODIMENTS

In embodiments of this application, the following terms such as "first" and "second" are merely used for description, and should not be construed as indicating or implying relative importance or implicitly indicating a quantity of technical features that are indicated. Therefore, a feature limited by "first" or "second" may explicitly or implicitly include one or more of the features. In the description of the embodiments, unless otherwise specified, "a plurality of" means two or more.

For ease of understanding embodiments of this application, terms and concepts related to embodiments of this application are first briefly described.

### 1. Acceleration sensor

The acceleration sensor is a device that can measure an acceleration force.

### 2. Hall sensor

The Hall sensor is a magnetic field sensor produced according to the Hall effect. An output voltage of the Hall sensor is proportional to magnetic field intensity. As the name implies, such a device operates based on the Hall effect. The Hall effect means that when a conductor is energized and a magnetic field is applied, a voltage may be generated in a transverse direction of the conductor.

### 3. Motion sensor

The motion sensor may include an acceleration sensor, a gravity sensor, a rotation vector sensor, and the like.

### 4. Gyro sensor

The gyro sensor (gyro sensor) is configured to measure a rotation rates around x, y, and z axes of a device.

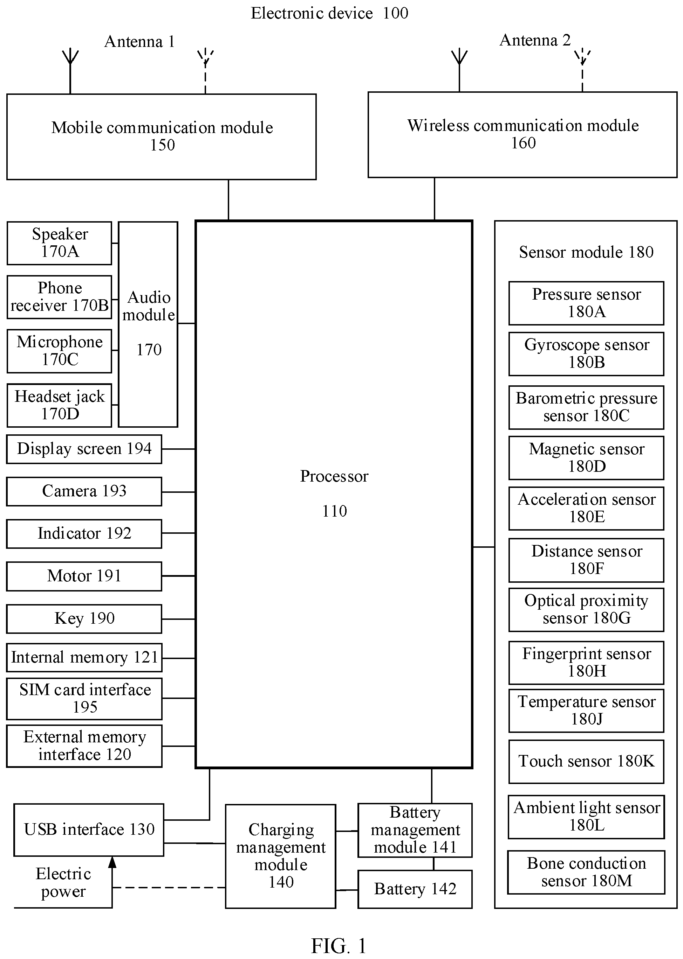

FIG. 1 is a schematic diagram of a hardware system of an electronic device applicable to this application.

The electronic device 100 may be a mobile phone, a smart screen, a tablet computer, a wearable electronic device, an on-board electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the electronic device 100 is not limited in this embodiment of this application.

The electronic device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It is to be noted that, the structure shown in FIG. 1 does not constitute a specific limitation on the electronic device 100. In some other embodiments of this application, the electronic device 100 may include more or fewer components than the components shown in FIG. 1, or the electronic device 100 may include a combination of some of the components shown in FIG. 1, or the electronic device 100 may include sub-components of some of the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent devices, or may be integrated devices. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB interface.

For example, in this embodiment of this application, the processor 110 may be configured to perform a display method provided in embodiments of this application. For example, first data, second data, and information about a folding angle are obtained, where the first data is data of a first display screen acquired by a first motion sensor, the second data is data of a second display screen acquired by a second motion sensor, and the folding angle is an included angle between the first display screen and the second display screen; a first direction is obtained based on the first data, where the first direction is a direction of an interface displayed by the first display screen; a second direction is based on the second data, where the second direction is a direction of an interface displayed by the second display screen; a third direction is obtained based on the information about the folding angle, the first direction, and the second direction, where the third direction is a direction of each of the interfaces displayed by the first display screen and the second display screen; and the first display screen and/or the second display screen displays the interface based on the third direction.

A connection relationship between modules shown in FIG. 1 is merely an example for description, and does not constitute a limitation on a connection relationship between modules of the electronic device 100. Optionally, each module of the electronic device 100 may also adopt a combination of various connection modes in the foregoing embodiment.

A wireless communication function of the electronic device 100 may be implemented by using devices such as the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The electronic device 100 may implement a display function by using the GPU, the display screen 194, and the application processor. The GPU is a microprocessor for image processing, and is connected to the display screen 194 and the application processor. The GPU is configured to perform mathematical and geometric calculation, and is used for graphics rendering. The processor 110 may include one or more GPUs, and execute program instructions to generate or change display information.

The display screen 194 may be configured to display images or videos.

Optionally, the display screen 194 may be configured to display images or videos. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the electronic device 100 may include one or N display screens 194, N being a positive integer greater than 1.

For example, in this embodiment of this application, the electronic device 100 may be a foldable electronic device. The display screen 194 may include at least two display screens.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is enabled. Light is transferred to a photosensitive element of the camera through a camera, and an optical signal is converted into an electrical signal. The photosensitive element of the camera transfers the electrical signal to the ISP for processing, and therefore, the electrical signal is converted into an image visible to a naked eye. The ISP may perform algorithm optimization for noise, a brightness, and a color of the image. The ISP may further optimize parameters such as an exposure and a color temperature of a to-be-photographed scene. In some embodiments, the ISP may be disposed in the camera 193.

The camera 193 (or referred to as a lens) is configured to capture a still image or a video. The camera may be enabled through triggering by an application instruction to implement a photographing function, such as capturing an image of any scene. The camera may include components such as an imaging lens, a light filter, and an image sensor. Light emitted or reflected by an object enters the imaging lens, passes through the filter, and finally converges on the image sensor. The imaging lens is mainly configured to converge and image light emitted or reflected by all objects (which may also be referred to as a to-be-photographed scene or a target scene or may be understood as a scene image that a user expects to perform photographing) in an angle of view for photographing. The filter is mainly configured to filter out a redundant light wave (for example, a light wave other than visible light, for example, infrared) in the light. The image sensor may be a charge coupled device (charge coupled device, CCD) or a complementary metal-oxide-semiconductor (complementary metal-oxide-semiconductor, CMOS) phototransistor. The image sensor is mainly configured to perform optical-to-electrical conversion on a received optical signal, to convert the optical signal into an electrical signal, and then transmit the electrical signal to the ISP to convert the electrical signal into a digital image signal. The ISP outputs the digital image signal to the DSP for processing. The DSP converts the digital image signal into a standard image signal in an RGB format, a YUV format, or the like.

In some embodiments, the electronic device 100 may include one or N cameras 193, N being a positive integer greater than 1.

For example, the digital signal processor is configured to process a digital signal, and can process another digital signal in addition to the digital image signal. For example, when the electronic device 100 performs frequency selection, the digital signal processor is configured to perform Fourier transform and the like on frequency energy.

For example, the video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, MPEG 4, and the like.

For example, the gyro sensor 180B may be configured to determine a motion posture of the electronic device 100. In some embodiments, an angular velocity of the electronic device 100 around three axes (namely, an x-axis, a y-axis, and a z-axis) may be determined through the gyro sensor 180B. The gyro sensor 180B may be configured to implement image stabilization during shooting. For example, when the shutter is pressed, the gyro sensor 180B detects an angle at which the electronic device 100 jitters, calculates, based on the angle, a distance for which a lens module needs to compensate, and causes the lens to offset the jitter of the electronic device 100 through reverse motion, thereby implementing image stabilization. The gyro sensor 180B may be further used in scenarios such as navigation and a somatosensory game.

For example, the acceleration sensor 180E may detect acceleration of the electronic device 100 in all directions (generally in the x-axis, the y-axis, and the z-axis). When the electronic device 100 is stationary, a magnitude and a direction of gravity may be detected. The acceleration sensor 180E may be further configured to recognize a pose of the electronic device 100, which is used as an input parameter for an application such as landscape/portrait screen switching and a pedometer.

For example, the distance sensor 180F is configured to measure a distance. The electronic device 100 may measure a distance by infrared light or laser. In some embodiments, for example, in a photographing scenario, the electronic device 100 may measure a distance by using the distance sensor 180F, to implement quick focusing.

For example, the ambient light sensor 180L is configured to sense ambient light brightness. The electronic device 100 may adaptively adjust brightness of the display screen 194 based on the sensed ambient light brightness. The ambient light sensor 180L may further be configured to automatically adjust white balance during photographing. The ambient light sensor 180L may also cooperate with the optical proximity sensor 180G to detect whether the electronic device 100 is in a pocket to prevent a false touch.

For example, the fingerprint sensor 180H is configured to collect a fingerprint. The electronic device 100 may implement functions such as unlocking, application lock accessing, photographing, and call answering by using a characteristic of the acquired fingerprint.

For example, the touch sensor 180K is also referred to as a touch device. The touch sensor 180K may be arranged on the display screen 194. The touch sensor 180K and the display screen 194 form a touchscreen, which is also referred to as a touch control screen. The touch sensor 180K is configured to detect a touch operation performed on or near the touch sensor 180K. The touch sensor 180K may transfer the detected touch operation to the application processor to determine a type of the touch event. The touch sensor 180K may provide a visual output related to the touch operation by using the display screen 194. In some other embodiments, the touch sensor 180K may be alternatively arranged on a surface of the electronic device 100 at a position different from that of the display screen 194.

For example, in this embodiment of this application, the electronic device 100 may be a foldable electronic device. The display screen 194 may include at least two display screens.

The hardware system of the electronic device 100 is described in detail above. A software system of electronic device 100 is described below.

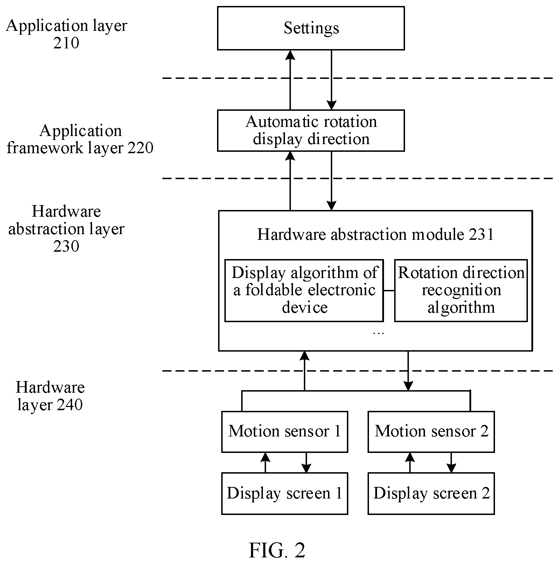

FIG. 2 is a schematic diagram of a software system of an electronic device according to an embodiment of this application.

As shown in FIG. 2, a system architecture may include an application layer 210, an application framework layer 220, a hardware abstraction layer 230, and a hardware layer 240.

The application layer 210 may include Settings or another application, and the another application includes but is not limited to an application such as Camera, Gallery, Calendar, Phone, Map, Navigation, WLAN, Bluetooth, Music, Video, and Messages.

The application framework 220 provides an application programming interface (application programming interface, API) and a programming framework for an application at the application layer. The application framework layer may include some predefined functions.

For example, in this embodiment of this application, the application framework layer 220 may include a predefine function or an interface for an automatic rotation display direction.

The hardware abstraction layer 230 is configured to abstract hardware.

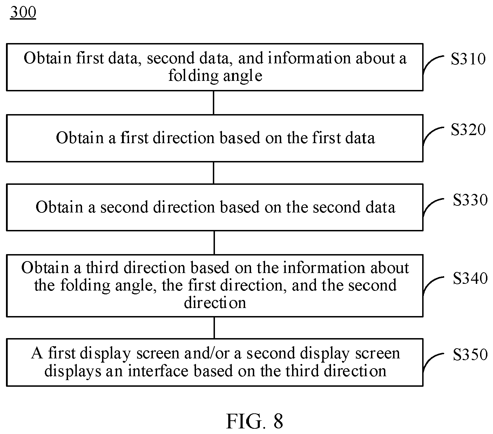

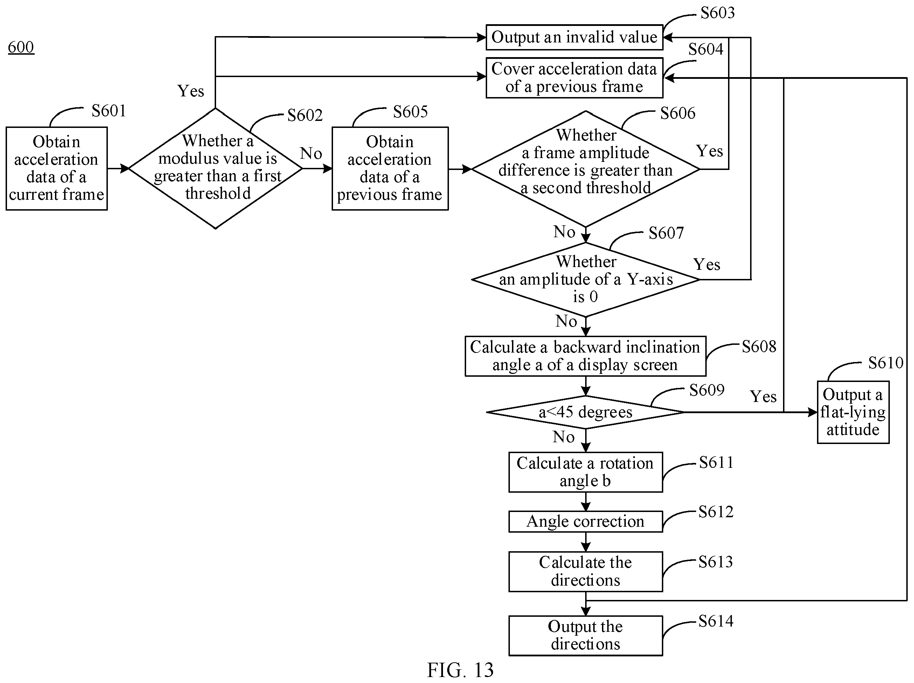

For example, the hardware abstraction layer 230 may include a hardware abstraction module 231. The hardware abstraction module 231 may include a display algorithm (for example, an algorithm shown in FIG. 8, FIG. 11, or FIG. 12) and a rotation direction recognition algorithm (for example, an algorithm shown in FIG. 13) of the foldable electronic device. For example, the hardware abstraction module 231 may be configured to run the display algorithm of the foldable electronic device to perform a display method provided in embodiments of this application. In the display method provided in embodiments of this application, a current attitude of the foldable electronic device may be recognized, so that the foldable electronic device can determine a display direction of a display interface in a display screen based on the current attitude.

The hardware layer 240 is located at a bottom layer of an operating system. For example, the hardware layer 240 may include a motion sensor 1, a motion sensor 2, a display screen 1, and a display screen 2. The motion sensor 1 corresponds to the display screen 1, and the motion sensor 2 corresponds to the display screen 2.

Optionally, the motion sensor 1 may include an acceleration sensor 1 and a Hall sensor 1, and the motion sensor 2 may include an acceleration sensor 2 and a Hall sensor 2.

Optionally, a drive layer may be further included between the hardware abstraction layer 230 and the hardware layer 240. The drive layer may be configured to provide driving for different hardware devices.

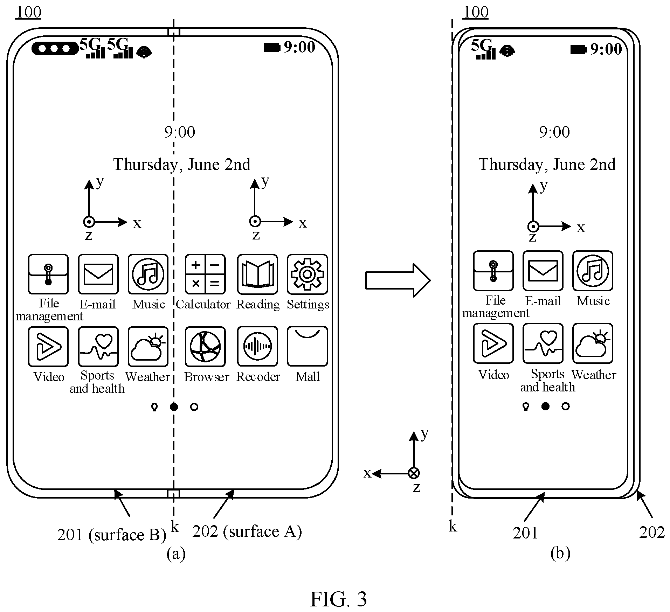

Generally, for the foldable electronic device, use forms of the foldable electronic device may include an unfolded state, a half-unfolded state, or a folded state in descending order of a folding angle of the foldable electronic device. For example, as shown in (a) in FIG. 3, the foldable electronic device is in the unfolded state, and the two display screens included in the foldable electronic device may be a display screen 201 and a display screen 202. When the foldable electronic is in the unfolded state, an included angle between the two display screens may be 180°.

Optionally, as shown in (a) in FIG. 3, an axis k may be an axis for bending the foldable electronic device. The display screen 201 may be located on a left side of the axis k, that is, the display screen may be a surface B on the foldable electronic device. The display screen may be located on a right side of the axis k, that is, the display screen may be a surface A located on the foldable electronic device. A back surface (for example, one side that is not for display) of the display screen 202 may include a camera.

Optionally, on a back side of the display screen 201, that is, on the other side of the surface B that is in an opposite direction of the display screen 201, an outer display screen is further included.

For example, as shown in (b) in FIG. 3, the foldable electronic device is in the folded state. When the foldable electronic is in the folded state, the included angle between the two display screens may be 0°. For example, back surfaces (sides that are not for display) of the two display screens may be oppositely attached to each other, and in this case, a folding manner of the foldable electronic device may be referred to as outward folding.

Optionally, an attitude of the foldable electronic device may include an unfolded state, a folded state, a tent state, or a notebook state.

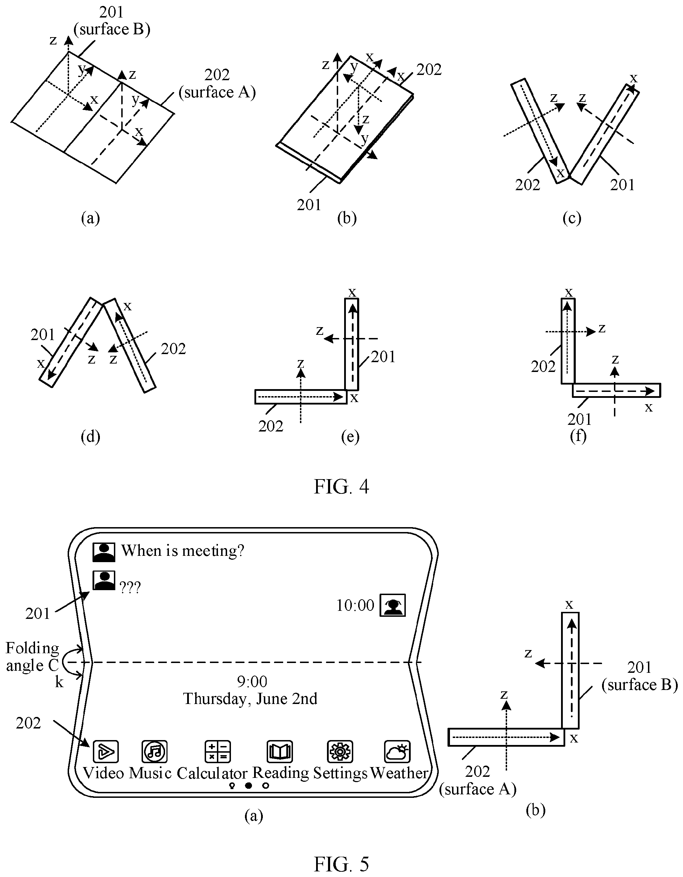

For example, the unfolded state of the foldable electronic device may be shown in (a) in FIG. 4. The display screen 201 may be a secondary display screen of the foldable electronic device, and the display screen 202 may be a primary display screen of the foldable electronic device. A back surface (for example, one side that is not for display) of the primary display screen includes a camera. When the foldable electronic device is in the unfolded state, the display screen 201 and the display screen 202 may be configured to perform display.

For example, the folded state of the foldable electronic device may be shown in (b) in FIG. 4. When the foldable electronic is in the folded state, only the outer display screen of the foldable electronic device may be configured to perform display. The outer display screen and the secondary display screen may be located on two different sides of a same surface of the foldable electronic device.

For example, the tent state of the foldable electronic device may be shown in (c) in FIG. 4 or (d) in FIG. 4. When the foldable electronic device is in the tent state, the outer display screen of the foldable electronic device may be in an operating state, and the included angle between the display screen 201 and the display screen 202 may be an acute angle (for example, the included angle may be less than 45 degrees).

For example, the notebook state of the foldable electronic device may be shown in (e) in FIG. 4 or (f) in FIG. 4. When the foldable electronic device is in the notebook state, the two display screens of the foldable electronic device may support independent display of content. For example, one of the two display screens of the foldable electronic device may be configured to display a main interface, and the other display screen is configured to display an interface of a running application.

It is to be understood that, the attitude of the foldable electronic device is for exemplary description, and the attitude of the foldable electronic device is not limited in this application.

It is to be understood that, the foldable electronic device may perform transition from the unfolded state to the half-unfolded state (for example, the tent state or the notebook state) and then be switched to the folded state, or may perform transition from the folded state to the half-unfolded state and then be switched to the unfolded state. The process is dynamic and reversible.

Currently, for a single-screen electronic device, a display direction of a display screen of the electronic device is only related to a state of the display screen. However, for the foldable electronic device, the foldable electronic device usually includes two display screens, and each display screen corresponds to a motion sensor. Since the foldable electronic device has relatively more attitude positions, if the display direction of the foldable electronic device is determined only by using data acquired by a motion sensor of the primary display screen of the foldable electronic device, during use, the attitude of the electronic device cannot accurately recognized, and a direction, a split screen, and the like of a display picture cannot be correspondingly adjusted, and consequently, users' use requirements in different scenarios cannot be met.

In an example, if an existing attitude recognition algorithm of the foldable electronic device is used, the attitude of the foldable electronic device is recognized by using the data acquired by the motion sensor of the primary display screen of the electronic device. When the foldable electronic device is in the notebook state, some scenarios cannot support automatic rotation of the display interface.

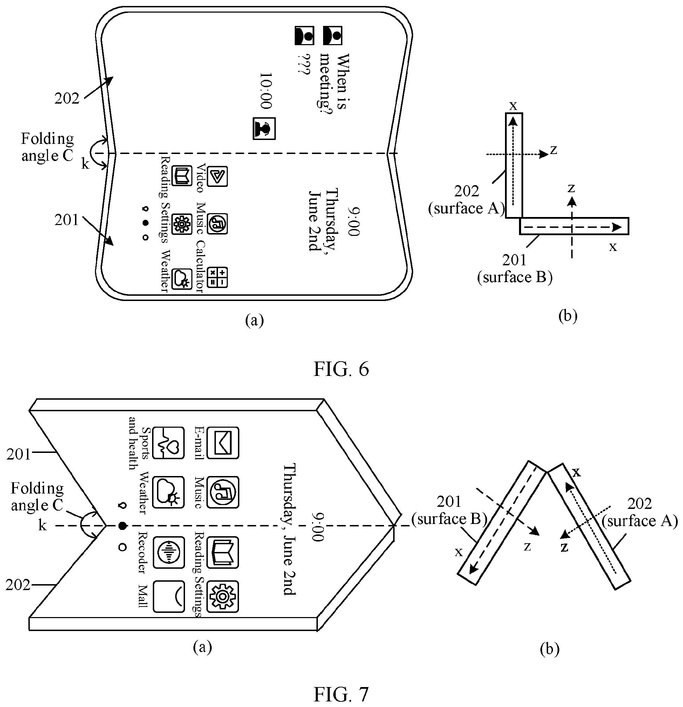

For example, (a) in FIG. 5 is a front view of a foldable electronic device in a notebook state, and (b) in FIG. 5 is a side view of a foldable electronic device in a notebook state. If the existing attitude recognition algorithm of the foldable electronic device is used, the attitude of the foldable electronic device is usually recognized by using the data acquired by the motion sensor corresponding to the primary display screen, that is, the attitude of the foldable electronic device is recognized by using data acquired by a motion sensor corresponding to the display screen 201 (the surface B). When the foldable electronic device is in the notebook state shown in FIG. 5, because the primary display screen 201 performs motion, the foldable electronic device may automatically rotate based on the data acquired by the motion sensor corresponding to the primary display screen 201. The display interface after rotation is shown in (a) in FIG. 5. However, if the foldable electronic device is in a notebook state shown in FIG. 6, where (a) in FIG. 6 is a front view of a foldable electronic device in a notebook state, and (b) in FIG. 6 is a side view of a foldable electronic device in a notebook state, as shown in (b) in FIG. 6, because the primary display screen 201 (the surface A) may be always in a horizontal state and does not perform motion, the motion sensor corresponding to the primary display screen 201 cannot acquire corresponding data, and when the foldable electronic device is in the notebook state shown in (a) in FIG. 6, the display interface of the foldable electronic device does not automatically rotate, causing poor user experience.

In an example, if the existing attitude recognition algorithm of the foldable electronic device is used, the attitude of the foldable electronic device is recognized by using the data acquired by the motion sensor of the primary display screen of the electronic device. When the foldable electronic device is in the tent state, some scenarios cannot support automatic rotation of the display interface, or a display direction in some scenarios is opposite to a display direction expected by the user.

For example, (a) in FIG. 7 is a front view of a foldable electronic device in a tent state, and (b) in FIG. 7 is a side view of a foldable electronic device in a tent state. As shown in (b) in FIG. 7, an x-axis recognized by the motion sensor corresponding to the display screen 201 (the surface B) is opposite to an x-axis recognized by a motion sensor corresponding to the display screen 202 (the surface A), and there is a difference in recognized z-axial directions. Therefore, if the attitude of the foldable electronic device is recognized based on data acquired by a motion sensor of one display screen of the foldable electronic device, accuracy is relatively low.

In view of this, embodiments of this application provide a display method, applied to a foldable electronic device. In solutions of this application, the foldable electronic device may include the first display screen and the second display screen. The first display screen corresponds to a first motion sensor, and the second display screen corresponds to a second sensor. It may be obtained, based on the first data acquired by the first motion sensor, that the direction of the interface displayed by the first display screen is the first direction. It may be obtained, based on the second data acquired by the second motion sensor, that the direction of the interface displayed by the second display screen is the second direction. It may be obtained, based on the information about the folding angle between the first display screen and the second display screen, the first direction, and the second direction, that the direction of each of the interfaces displayed by the first display screen and the second display screen is the third direction. Compared with determining the display direction of the foldable electronic device based on the data acquired by the motion sensor of the primary display screen of the foldable electronic device, in embodiments of this application, the third direction is determined based on data acquired by each motion sensor of the foldable electronic device and the information about the folding angle. Therefore, the display method in embodiments of this application is applicable to various attitudes of the foldable electronic device, to ensure that directions of interfaces displayed by the foldable electronic device in various scenarios can meet users' use requirements, thereby improving user experience.

Optionally, the display method provided in embodiments of this application is applicable to recognition of different attitudes of the foldable electronic device. The different attitudes of the foldable electronic device may include any attitude shown in FIG. 4.

The display method provided in embodiments of this application is described in detail below with reference to FIG. 8 to FIG. 22.

FIG. 8 is a schematic flowchart of a display method according to an embodiment of this application. The method may be performed by the electronic device shown in FIG. 1. The method 300 includes step S310 to step S340. Step S310 to step S340 are respectively described below in detail.

It is to be understood that, the display method provided in embodiments of this application is applied to a foldable electronic device. The foldable electronic device may include a first display screen and a second display screen. Each display screen included in the foldable electronic device may correspond to one motion sensor. For example, the foldable electronic device may further include a first motion sensor and a second motion sensor, where the first motion sensor is configured to acquire data of the first display screen, and the second motion sensor is configured to acquire data of the second display screen.

Step S310: Obtain first data, second data, and information about a folding angle.

The first data is data of a first display screen acquired by a first motion sensor. The second data is data of a second display screen acquired by a second motion sensor. The folding angle may be an included angle between the first display screen and the second display screen.

Optionally, the first motion sensor may include a first acceleration sensor, where the first acceleration sensor is configured to acquire acceleration data of the first display screen; and the second motion sensor may include a second acceleration sensor, where the second acceleration sensor is configured to acquire acceleration data of the second display screen.

Optionally, the first motion sensor may further include a first Hall sensor and/or a first gyro sensor; and the second motion sensor may further include a second Hall sensor and/or a second gyro sensor.

It is to be understood that, for the foldable electronic device, different display screens may correspond to different motion sensors. For example, one motion sensor may be configured to acquire data of one display screen.

Optionally, the data includes but is not limited to: acceleration data, gyro data, or other data of the display screen acquired by the motion sensor of the display screen.

Optionally, as shown in (a) in FIG. 4, the folding angle may be an included angle between an inner screen on the surface A and an inner screen on the surface B of the foldable electronic device.

For example, the folding angle may be shown in (a) in FIG. 5, and the folding angle may be a folding angle C.

Optionally, the information about the folding angle may be obtained based on data of the acceleration sensors, the gyro sensors, or the Hall sensors respectively corresponding to the first display screen and the second display screen.

For example, a Hall signal is read through the Hall sensors of the foldable electronic device, and a speed corresponding to the Hall signal is obtained through table lookup. Alternatively, an acceleration signal and an angular velocity signal corresponding to each display screen are respectively read through the acceleration sensors and the gyro sensors disposed on the two display screens of the foldable electronic device. Then, a folded state of the foldable electronic device is detected; and the folding angle of the foldable electronic device is determined by using different algorithms according to different folded states of the foldable electronic device in combination with two sets of acceleration signals and angular velocity signals or in combination with two sets of angular velocity signals.

It is to be understood that, the manner of obtaining the folding angle is described above by using an example, which is not limited in this application.

Step S320: Obtain a first direction based on the first data.

The first direction may be a direction of an interface displayed by the first display screen.

It is to be understood that, the first direction may be an arrangement direction of content information displayed in the first display screen.

Optionally, the first data may be processed by using a rotation direction recognition algorithm, to obtain the first direction. Optionally, for the rotation direction recognition algorithm, refer to related descriptions of FIG. 13 below.

Optionally, the first direction may include but is not limited to any one of the following:
the portrait display direction, the landscape left display direction, the reverse portrait display direction, or the landscape right display direction. When the foldable electronic device is in the portrait display direction, a charging port of the foldable electronic device is downward. When the foldable electronic device is in the landscape left display direction, the charging port of the foldable electronic device is rightward. When the foldable electronic device is in the reverse portrait display direction, the charging port of the foldable electronic device is upward. When the foldable electronic device is in the landscape right display direction, the charging port of the foldable electronic device is leftward.

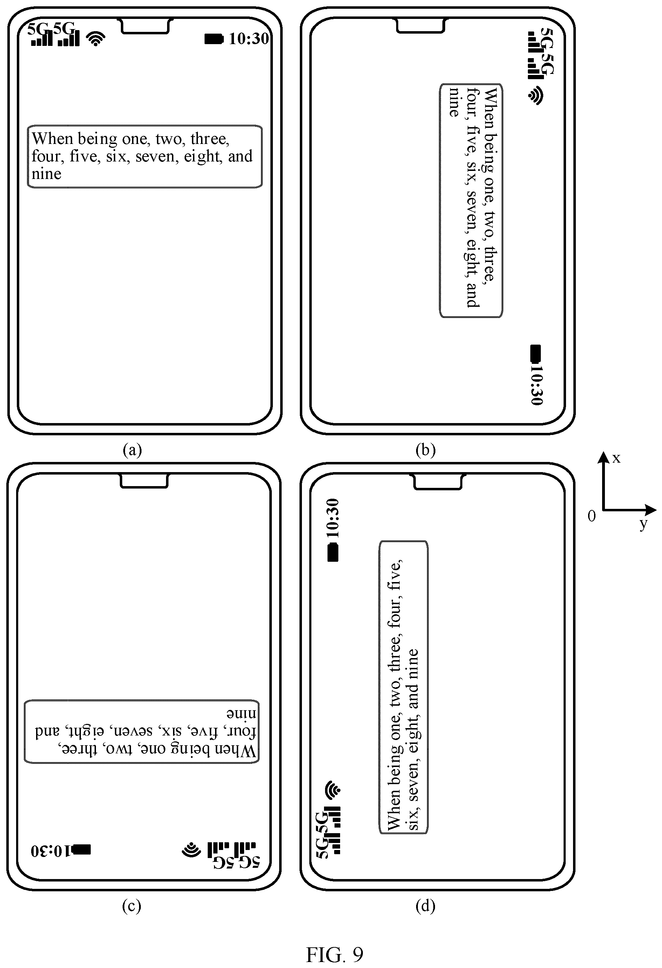

For example, descriptions are made below by using FIG. 9 as an example. FIG. 9 is described by using single-display as an example. The single-display screen may be any display screen of the foldable electronic device. (a) in FIG. 9 shows a portrait display direction. When a direction of an interface displayed by the display screen is the portrait display direction, content information displayed in the interface is arranged in a positive direction of the y-axis. (b) in FIG. 9 shows a landscape left display direction. When the direction of the interface displayed by the display screen is the landscape left display direction, content information displayed in the interface is arranged in a negative direction of the x-axis. (c) in FIG. 9 shows a reverse portrait display direction. When the direction of the interface displayed by the display screen is the reverse portrait display direction, content information displayed in the interface is arranged in a negative direction of the y-axis. (d) in FIG. 9 shows a landscape right display direction. When the direction of the interface displayed by the display screen is the landscape right display direction, content information displayed in the interface is arranged in the negative direction of the x-axis.

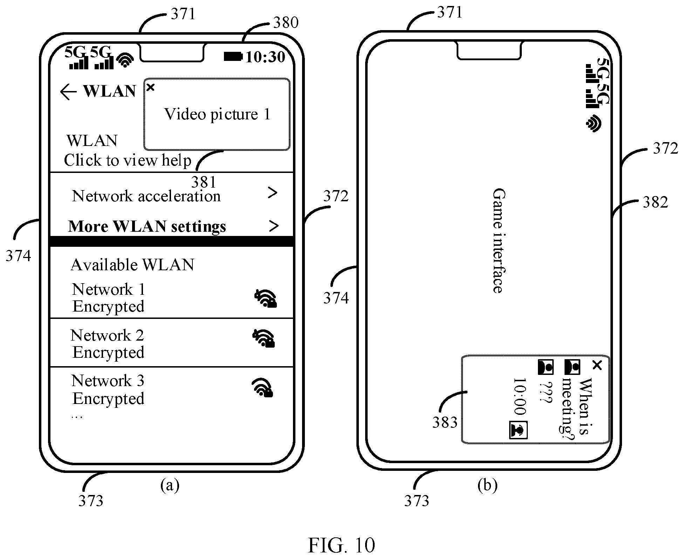

Optionally, one display screen may further include a main interface and a floating window. For example, as shown in (a) in FIG. 10, an electronic device includes a first side 371, a second side 372, a third side 373, and a fourth side 374. A display screen includes a main interface 380 and a floating window 381. In this case, the direction of an interface displayed by the display screen may be a direction in which the interface faces. As shown in (a) in FIG. 10, a direction of the main interface 380 and a direction of the floating window 381 may be upward, that is, both a display direction of the main interface 380 and a display direction of the floating window 381 face toward the first side 371. Similarly, as shown in (b) in FIG. 10, the direction of the main interface 382 and the direction of the floating window 383 may be rightward, that is, both the display direction of the main interface 382 and the display direction of the floating window 383 face toward the second side 372.

It is to be understood that, in FIG. 10, the direction of the interface displayed by the display screen is described by using a single display screen as an example. The display screen in FIG. 10 may alternatively be any display screen of the foldable electronic device. The descriptions of FIG. 9 and FIG. 10 are also applicable to the foldable electronic device.

Step S330: Obtain a second direction based on the second data.

The second direction may be a direction of an interface displayed by the second display screen.

It is to be understood that, the second direction may be an arrangement direction of content information displayed in the second display screen.

For example, the second data may be processed by using the rotation direction recognition algorithm, to obtain the second direction. Optionally, for the rotation direction recognition algorithm, refer to related descriptions of FIG. 13 below.

Optionally, the second direction may include but is not limited to any one of the following:
the portrait display direction, the landscape left display direction, the reverse portrait display direction, the landscape right display direction, or the like. For detailed descriptions, refer to the related descriptions of FIG. 9 and FIG. 10. Details are not described herein again.

Step S340: Obtain a third direction based on the information about the folding angle, the first direction, and the second direction.

The third direction may be a direction of each of the interfaces displayed by the first display screen and the second display screen.

It is to be understood that, the first direction may be a direction indicating the interface displayed by the first display screen; the second display screen may be a direction indicating the interface displayed by the second display screen; and the third direction may be obtained based on the information about the folding angle between the first display screen and the second display screen, the first direction, and the second direction, and the third direction may be a direction indicating the interfaces displayed by the first display screen and the second display screen, that is, the third direction obtained in this embodiment of this application may be a direction that is used for indicating both the interfaces displayed by the first display screen and the second display screen.

Optionally, the obtaining a third direction based on the information about the folding angle, the first direction, and the second direction includes:
determining a current attitude of the foldable electronic device based on the information about the folding angle, where the current attitude is used for indicating a current unfolded state or folded state of the foldable electronic device; and
obtaining the third direction based on the current attitude, the first direction, and the second direction.

In this embodiment of this application, the current attitude of the foldable electronic device may be determined based on the folding angle; and a display direction, that is, the third direction of the foldable electronic device in the current attitude may be obtained based on the current attitude, the first direction, and the second direction. In this embodiment of this application, the third direction may be obtained based on the data acquired by the first motion sensor of the first display screen, the data acquired by the second motion sensor of the second display screen, and the folding angle. Therefore, compared with the display direction obtained only based on the data acquired by the motion sensor of the primary display screen of the foldable electronic device, the display method provided in embodiments of this application is applicable to more application scenarios, that is, applicable to more attitudes of the foldable electronic device, which avoids a problem that a display direction is opposite to a direction expected by the user in some scenarios, so that users' use requirements in different scenarios can be met, thereby improving user experience.

Optionally, in this embodiment of this application, the current attitude of the foldable electronic device may include an unfolded state, a folded state, a tent state, or a notebook state. The unfolded state may be shown in (a) in FIG. 4. The folded state may be shown in (b) in FIG. 4. The tent state may be shown in (c) in FIG. 4 or (d) in FIG. 4. The notebook state may be shown in (e) in FIG. 4 or (f) in FIG. 4.

Optionally, when the foldable electronic device is in the notebook state, the first display screen and the second display screen of the foldable electronic device may be independent of each other. For example, the first display screen may display a main interface of the foldable electronic device, and the second display screen may display a display interface of the foldable electronic device in which an application is currently run.

The following separately describes, in detail, a process of obtaining the third direction based on the current attitude, the first direction, and the second direction when the foldable electronic device is in different current attitudes.

Optionally, the determining a current attitude of the foldable electronic device based on the information about the folding angle includes:
determining that the current attitude is a folded attitude when the folding angle is less than or equal to a first preset threshold;
determining that the current attitude is an intermediate attitude when the folding angle is less than or equal to a second preset threshold, where the intermediate attitude is used for indicating an instantaneous attitude of the foldable electronic device, and the second preset threshold is greater than the first preset threshold; and
determining that the current attitude is a first unfolded attitude when the folding angle is in a first preset range and the first display screen is in a horizontal state.

Optionally, it is determined that the current attitude is a second unfolded attitude when the folding angle is less than or equal to a third preset threshold, where the third preset threshold is greater than the first preset threshold and less than the second preset threshold.

For example, the first preset threshold may be 10 degrees. If the folding angle between the first display screen and the second display screen is less than or equal to 10 degrees, it may be considered that the foldable electronic device is in the folded state.

For example, the third preset threshold may be 45 degrees, and the second unfolded attitude may mean that the foldable electronic device is in the tent state.

For example, the second preset threshold may be 70 degrees, and the second unfolded attitude may be in the intermediate attitude in which the foldable electronic device is in transition from the tent state to the notebook state.

For example, the first preset range may be [70, 135], and the first unfolded attitude may mean that the foldable electronic device is in the notebook state.

In this embodiment of this application, when whether the foldable electronic device is in the first unfolded attitude or the second unfolded attitude is determined, determining may be performed based on a plurality of frames of information about the folding angle. Since the tent state and the notebook state are not instantaneous states, if the foldable electronic device is in the tent state or the notebook state, the plurality frames of information about the folding angle meets a condition. In addition, whether the foldable electronic device is in the tent state or the notebook state is determined by using the plurality of frames of data, which may also avoid mistaken touch data generated by mistaken touch on the foldable electronic device, thereby improving accuracy of recognizing the current attitude.

Optionally, the folding angle is angle information obtained based on a current frame of data, and the determining that the current attitude is a first unfolded attitude when the folding angle is in a first preset range and the first display screen is in a horizontal state includes:
obtaining a first data frame set, where the first data frame set includes a current frame of data; and determining that the current attitude is a first unfolded attitude when the folding angle in the first data frame set is in the first preset range and the first display screen is in the horizontal state.

In this embodiment of this application, when the current attitude of the foldable electronic device is determined based on the folding angle between the first display screen and the second display screen, to ensure accuracy of the current attitude, a plurality of frames of information about the folding angle may be obtained, and the current attitude of the foldable electronic device is determined when a plurality of frames of data meets a condition, to effectively avoid a problem of low accuracy of recognizing the current attitude of the foldable electronic device due to mistaken touch, thereby improving accuracy of the current attitude.

Optionally, the folding angle is the angle information obtained based on the current frame of data, and the determining that the current attitude is a second unfolded attitude when the folding angle is less than or equal to a third preset threshold includes:
obtaining a second data frame set, where the second data frame set includes a current frame of data; and determining that the current attitude is the second unfolded attitude when the folding angle in the second data frame set is less than or equal to the third preset threshold.

In this embodiment of this application, when the current attitude of the foldable electronic device is determined based on the folding angle between the first display screen and the second display screen, to ensure accuracy of the current attitude, a plurality of frames of information about the folding angle may be obtained, and the current attitude of the foldable electronic device is determined when a plurality of frames of data meets a condition, to effectively avoid a problem of low accuracy of recognizing the current attitude of the foldable electronic device due to mistaken touch, thereby improving accuracy of the current attitude.

Optionally, the first data frame set and the second data frame set may include data of a same quantity of frames; or the first data frame set and the second data frame set may include data of different quantities of frames.

For example, the third direction is related to the information about the folding angle of the foldable electronic device. Based on different folding angles, the current attitudes of the foldable electronic device are different. Therefore, that the third direction is related to the current attitude of the foldable electronic device may include the following cases:
Case 1: The first display screen is the primary display screen of the foldable electronic device, and if the current attitude of the foldable electronic device is the folded state, the third direction is the same as the first direction.

It is to be understood that, the primary display screen may be a display screen preconfigured in the foldable electronic device, or the primary display screen may be a display screen that is in the foldable electronic device and that includes an external camera.

Optionally, the first display screen is a primary display screen of the foldable electronic device, and when the current attitude is the folded attitude, the third direction is the same as the first direction.

In this embodiment of this application, if the foldable electronic device is in the folded state, a direction of any display screen may be used as the direction of each of the interfaces displayed by the first display screen and the second display screen of the foldable electronic device. For example, if the foldable electronic device is in the folded state, the first direction of the primary display screen may be set as the display direction of the foldable electronic device, that is, the third direction is the same as the first direction.

Case 2: If the current attitude of the foldable electronic device is the intermediate attitude, the third direction is the same as a historical direction.

Optionally, the first data, the second data, and the information about the folding angle are data obtained at the moment t, and when the current attitude is the intermediate attitude, the third direction is a historical direction, where the historical direction is a direction that is of the interfaces displayed by the first display screen and the second display screen and that is obtained based on data obtained at a moment t-1.

For example, the intermediate attitude may be an intermediate attitude in transition from the tent state to the notebook state, and the attitude may be an instantaneous attitude at a short time.

For example, if it is obtained, based on the first data, the second data, and the information about the folding angle that are obtained at the moment t-1, that the third direction at the moment t-1 is a direction A, it is determined, based on angle information obtained at the moment t, that the current attitude of the foldable electronic device is the intermediate attitude, and the third direction at the moment t is the direction A.

Case 3: If the current attitude of the foldable electronic device is the notebook state, the third direction is the same as the second direction.

Optionally, the first display screen is a primary display screen of the foldable electronic device, and when the current attitude is the first unfolded attitude, the third direction is the same as the second direction.

In this embodiment of this application, when the current attitude of the foldable electronic device is the notebook state and the primary display screen of the foldable electronic device is in the horizontal state, because the motion sensor of the primary display screen cannot acquire valid data, in this case, the display direction of the second display screen may be used as the display direction of the foldable electronic device.

Case 4: If the current attitude of the foldable electronic device is the tent state, the third direction is the same as the second direction.

Optionally, the first display screen is a primary display screen of the foldable electronic device, and when the current attitude is the second unfolded attitude, the third direction is the same as the second direction.

In this embodiment of this application, when the foldable electronic device is the tent state, the direction of each of the interfaces displayed by the first display screen and the second display screen of the foldable electronic device is the second direction. When the foldable electronic device is in the tent state, an outer screen of the foldable electronic device can perform display. Generally, the outer screen and a secondary display screen of the foldable electronic device are usually located on two different sides of one surface, and in this case, the second direction obtained based on the secondary display screen may be used as the display direction of the foldable electronic device, that is, the third direction is the same as the second direction.

Case 5: If the folding angle is beyond the first preset range, the third direction may be determined based on the tag value of the first direction and the tag value of the second direction.

Optionally, when the folding angle is not in the first preset range, if a tag value of the first direction is greater than or equal to a tag value of the second direction, the third direction is the same as the first direction; or

if a tag value of the first direction is less than a tag value of the second direction, the third direction is the same as the second direction.

For example, it is assumed that a tag value of the portrait display direction is 0, a tag value of the landscape left display direction is 1, a tag value of the reverse portrait display direction is 2, and a tag value of the landscape right display direction is 3, when the folding angle is not in the first preset range, the first direction is the landscape left display direction and the second direction is the portrait display direction, and the tag value of the first direction is 0 and the tag value of the second direction is 1. In this case, the tag value of the first direction is less than the tag value of the second direction, and the third direction is the same as the second direction.

In this embodiment of this application, when the folding angle is not in a first range, the tag value of the first direction and the tag value of the second direction may be compared, to further output a valid display direction.

Step S350: The first display screen and/or the second display screen displays the interface based on the third direction.

Optionally, the first display screen and the second display screen may display the interfaces based on the third direction.

Optionally, whether the first display screen and the second display screen enable a screen rotation function may be first determined. When the screen rotation function is enabled, the first display screen and/or the second display screen may display the interfaces based on the third direction.

In an example, if both the first display screen and the second display screen enable the screen rotation function, the first display screen and the second display screen may display the interfaces based on the third direction.

In an example, when the first display screen enables the screen rotation function and the second display screen does not enable the screen rotation function, the first display screen may display the interface based on the third direction, that is, the direction of the interface displayed by the second display screen may be stored and unchanged.

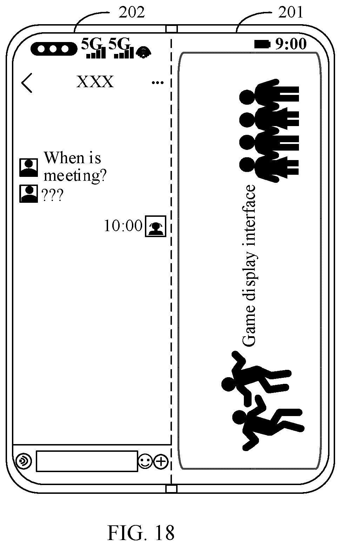

For example, as shown in FIG. 18, the first display screen may be the display screen 201, the second display screen may be the display screen 202, and the third direction may be the portrait display direction. In this case, because the display screen 202 enables the screen rotation function, and a game displayed by the display screen 201 displays an interface and does not enable the screen rotation function, an interface displayed by the display screen 202 is in the portrait display direction, and an interface displayed by the display screen 201 is in the landscape right display direction.

In an example, when the second display screen enables the screen rotation function and the first display screen does not enable the screen rotation function, the second display screen may display the interface based on the third direction, that is, the direction of the interface displayed by the first display screen may be stored and unchanged.

In an example, in this embodiment of this application, two independent controls may be used to control the first display screen and the second display screen whether to enable the screen rotation function.

Optionally, that the first display screen and the second display screen display the interfaces based on the third direction includes:
detecting a first operation on the first display screen, where the first operation is an operation for instructing the first display screen to enable screen rotation;
displaying, by the first display screen in response to the first operation, the interface based on the third direction;
detecting a second operation on the second display screen, where the second operation is an operation for instructing the second display screen to enable screen rotation; and
displaying, by the second display screen in response to the second operation, the interface based on the third direction.

For example, the foldable electronic device may include a first control, where the first control is a control for enabling/disabling the screen rotation function of the first display screen; and the first operation may be an operation of enabling the screen rotation function of the first display screen. For example, the first operation may be an operation of tapping the first control.

For example, the foldable electronic device may include a second control, where the second control is a control for enabling/disabling the screen rotation function of the second display screen; and the second operation may be an operation of enabling the screen rotation function of the second display screen. For example, the second operation may be an operation of tapping the second control.

In an example, in this embodiment of this application, one control may be used to perform overall control on the first display screen and the second display screen whether to enable the screen rotation function.

Optionally, that the first display screen and the second display screen display the interfaces based on the third direction includes:
detecting a third operation on the first display screen, where the third operation is an operation of instructing the first display screen and the second display screen to enable screen rotation; and
displaying, by the first display screen and the second display screen in response to the third operation, the interfaces based on the third direction.

For example, the foldable electronic device may include a third control, where the third control is a control for enabling/disabling the screen rotation functions of the first display screen and the second display screen; and the third operation may be an operation of enabling the screen rotation functions of the first display screen and the second display screen. For example, the third operation may be an operation of tapping the third control.

Optionally, that the first data, the second data, and the information about the folding angle are data obtained at the moment t further includes:
obtaining interface display data at the moment t-1; and
that the first display screen and/or the second display screen displays the interface based on the third direction includes:
   displaying, by the first display screen and/or the second display screen, the interface based on the interface display data at the moment t-1 and the third direction.

In this embodiment of this application, interface display data at a previous moment of a current moment may be obtained. When the interface is displayed at the current moment, interface rendering may be implemented based on the interface display data and the third direction, thereby effectively reducing power consumption of the foldable electronic device.

Optionally, in this embodiment of this application, the method further includes: storing the third direction. It is to be understood that, information about the direction is stored to determine whether there is a need to adjust the display interface of the interface displayed by the foldable electronic device during subsequent determining. For example, if a third direction obtained based on data obtained at the previous moment of the current moment is the direction A (for example, the portrait display direction), and a third direction obtained based on data obtained at the current moment is also the direction A, the direction of the interface displayed by the foldable electronic device may remain unchanged, that is, the foldable electronic device may not adjust the display direction of the interface that is displayed. If the third direction obtained based on the data at the previous moment of the current moment is the direction A (for example, the portrait display direction), and the third direction obtained based on the data obtained at the current moment is a direction B (for example, the landscape left display direction), the foldable electronic device needs to adjust the display direction of the interface displayed by the foldable electronic device. Alternatively, when an invalid state is outputted by using a rotation direction recognition algorithm, the information about the stored third direction needs to be obtained. For example, when data at a next moment of the current moment is processed based on a display direction recognition algorithm, an output is an invalid state (for example, an invalid value or a flat-lying attitude is outputted). In this case, the direction of the interface displayed by the foldable electronic device is a historical direction obtained from the stored direction. In other words, when an output obtained by the foldable electronic device based on the rotation direction recognition algorithm is the invalid state, the direction of the interface displayed by the foldable electronic device may be the historical direction, and the foldable electronic device may not change the display direction of the interface that is displayed.

In embodiments of this application, the foldable electronic device may include the first display screen and the second display screen. The first display screen corresponds to the first motion sensor, and the second display screen corresponds to a second sensor. It may be obtained, based on the first data acquired by the first motion sensor, that the direction of the interface displayed by the first display screen is the first direction. It may be obtained, based on the second data acquired by the second motion sensor, that the direction of the interface displayed by the second display screen is the second direction. It may be obtained, based on the information about the folding angle between the first display screen and the second display screen, the first direction, and the second direction, that the direction of each of the interfaces displayed by the first display screen and the second display screen of the foldable electronic device is the third direction. The first display screen and/or the second display screen displays the interface based on the third direction. Compared with determining a display direction of the foldable electronic device based on data acquired by a motion sensor of a primary display screen of the foldable electronic device, in this solution, the third direction is determined based on data acquired by a motion sensor corresponding to each display screen of the foldable electronic device and a folding angle between display screens, so that the display method in this solution can ensure that the foldable electronic device can meet users' use requirements in various scenarios, thereby improving user experience.

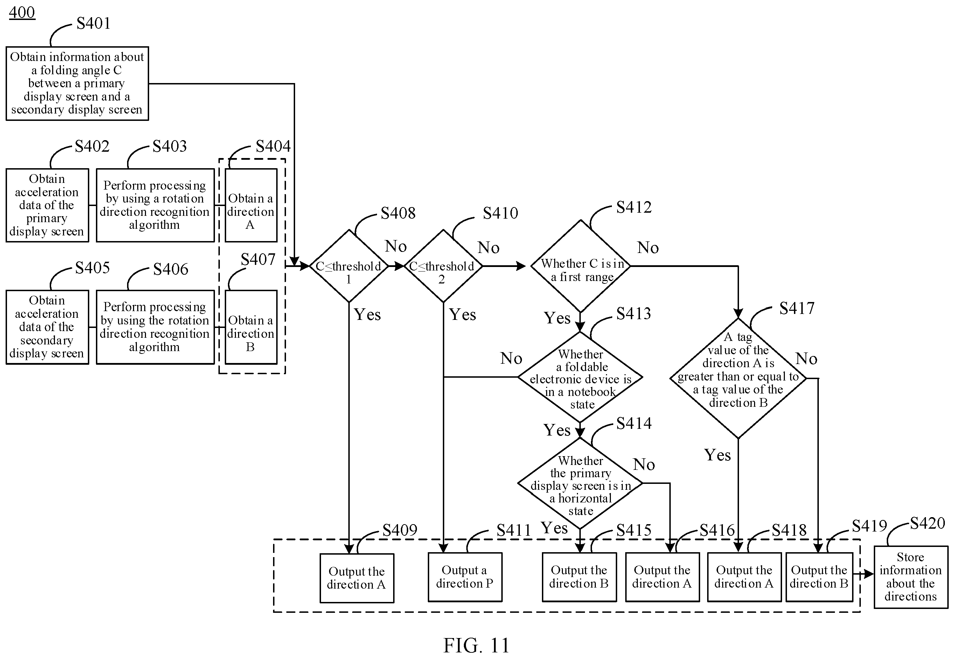

FIG. 11 is a schematic flowchart of a display method according to an embodiment of this application. The method may be performed by the electronic device shown in FIG. 1. The method 400 includes step S401 to step S420. Step S401 to step S420 are respectively described below in detail.

Step S401: Obtain information about a folding angle C between a primary display screen and a secondary display screen.

For example, the foldable electronic device includes a Hall sensor. The Hall sensor may output the information about the folding angle C between the primary display screen and the secondary display screen of the foldable electronic device.

For example, for the foldable electronic device, the information about the folding angle between the primary display screen and the secondary display screen may be obtained based on data of acceleration sensors, gyro sensors, or Hall sensors of the primary display screen and the secondary display screen.

For example, a Hall signal is read through the Hall sensors of the foldable electronic device, and a speed corresponding to the Hall signal is obtained in a table lookup manner. Alternatively, an acceleration signal and an angular velocity signal corresponding to each display screen are respectively read through the acceleration sensors and the gyro sensors disposed on the two display screens of the foldable electronic device. Then, a folded state of the foldable electronic device is detected, and the information about the folding angle C of the foldable electronic device is determined by using different algorithms according to different folded states of the foldable electronic device in combination with two sets of acceleration signals and angular velocity signals or in combination with two sets of angular velocity signals.

It is to be understood that, the manner of obtaining the folding angle is described above by using an example, which is not limited in this application.

Step S402: Obtain acceleration data of the primary display screen (which is an example of obtaining first data).

It should be understood that, the foldable electronic device may include the primary display screen and the secondary display screen. The primary display screen and the secondary display screen may each have an acceleration sensor.

For example, data of the acceleration sensor of the primary display screen may be acquired, to obtain the acceleration data of the primary display screen.

Step S403: Perform processing by using a rotation direction recognition algorithm.

For example, the acceleration data of the primary display screen may be processed by using the rotation direction recognition algorithm, to obtain direction information of the primary display screen.

Optionally, for a specific implementation of the rotation direction recognition algorithm, refer to related descriptions of FIG. 13 below. Details are not described herein again.

It is to be understood that, a direction (for example, a tag value of a display direction) of an interface displayed by one display screen (for example, the primary display screen) may be obtained based on the rotation direction recognition algorithm. The direction of the interface that is displayed may indicate an arrangement manner of content information displayed in the display screen, for example, a portrait display direction, a landscape left display direction, a landscape back display direction, a reverse portrait display direction, or the like. Optionally, for detailed descriptions of the display direction, refer to the related descriptions of FIG. 9 and FIG. 10. Details are not described herein again.

Step S404: Obtain a direction A (which is an example of a first direction).

It is to be understood that, the direction A may be a display direction of an interface displayed by the primary display screen. In other words, the display direction may be considered as an arrangement direction of displayed content.

Optionally, the direction A may be the first direction shown in FIG. 8.

For example, the acceleration data of the primary display screen is processed based on the rotation direction recognition algorithm, so that the direction A of the primary display screen may be obtained. The direction A is the direction of the interface displayed by the primary display screen.

For example, the direction A may include any one of the following display directions:
the portrait display direction, the landscape left display direction, the reverse portrait display direction, or the landscape right display direction. When the foldable electronic device is in the portrait display direction, a charging port of the foldable electronic device is downward. When the foldable electronic device is in the landscape left display direction, the charging port of the foldable electronic device is rightward. When the foldable electronic device is in the reverse portrait display direction, the charging port of the foldable electronic device is upward. When the foldable electronic device is in the landscape right display direction, the charging port of the foldable electronic device is leftward.

It is to be understood that, different display directions may correspond to different tag values. For example, a tag value of the portrait display direction may be 0, a tag value of the landscape left display direction may be 1, a tag value of the reverse portrait display direction may be 2, and a tag value of the landscape right display direction may be 3. Different tag values may be outputted based on the rotation direction recognition algorithm, and the different tag values may correspond to different display directions of the display screen.

Optionally, a tag value corresponding to the display direction may further include -1. For example, the tag value -1 may be used for indicating a mistaken rotation instruction. When the tag value -1 is outputted, the display direction of the display interface may not be changed.

Step S405: Obtain acceleration data of the secondary display screen (which is an example of obtaining second data).

For example, data of the acceleration sensor of the secondary display screen may be acquired, to obtain the acceleration data of the primary display screen.

Optionally, before step S402 and step S405 are performed, the acceleration sensor corresponding to the primary display screen and the acceleration sensor corresponding to the secondary display screen of the foldable electronic device may be calibrated.

Step S406: Perform processing by using a rotation direction recognition algorithm.

For example, the acceleration data of the secondary display screen may be processed based on the rotation direction recognition algorithm, to obtain a direction of an interface displayed by the secondary display screen.

Optionally, for a specific implementation of the rotation direction recognition algorithm, refer to related descriptions of FIG. 13 below. Details are not described herein again.

It may be understood that, for detailed descriptions of the display direction, refer to the related descriptions of FIG. 9 and FIG. 10. Details are not described herein again.

Optionally, in step S406 and step S403, a same rotation direction recognition algorithm may be used.

Step S407: Obtain a direction B (which is an example of a second direction).

Optionally, the direction B may be the second direction shown in FIG. 8.

For example, the acceleration data of the secondary display screen may be processed based on the rotation direction recognition algorithm, to obtain that the direction of the interface displayed by the secondary display screen is the direction B.

For example, the direction B may include any one of the following display directions:
the portrait display direction, the landscape left display direction, the reverse portrait display direction, or the landscape right display direction. Optionally, for detailed descriptions, refer to FIG. 9 and FIG. 10. Details are not described herein again.

It is to be understood that, different display directions may correspond to different tag values. For example, a tag value of the portrait display direction may be 0, a tag value of the landscape left display direction may be 1, a tag value of the reverse portrait display direction may be 2, and a tag value of the landscape right display direction may be 3. Different tag values may be outputted based on the rotation direction recognition algorithm, and the different tag values may correspond to different display directions of the display screen.

Optionally, a tag value corresponding to the display direction may further include -1. For example, the tag value -1 may be used for indicating a mistaken rotation instruction. When the tag value -1 is outputted, the display direction of the display interface may not be changed.

Step S408: Determine whether the folding angle C is less than or equal to a threshold 1, where if yes, step S409 is performed; or if no, step S410 is performed.

In this embodiment of this application, whether the folding angle C is less than or equal to the threshold 1 is determined to determine whether the foldable electronic device is in a folded state. If the foldable electronic device is in the folded state, a direction of any display screen may be used as the display direction. For example, if the foldable electronic device is in the folded state, the direction A of the primary display screen may be set as the display direction of the interface of the foldable electronic device.

It is to be understood that, as shown in (b) in FIG. 4, the foldable electronic device is in the folded state. When the foldable electronic device is in the folded state, only an outer screen of the foldable electronic device can be used. In addition, directions of an x-axis and a z-axis obtained based on devices of the primary display screen 201 and the secondary display screen 202 are opposite. Therefore, when the foldable electronic device is in the folded state, a display direction of any display screen may be used as the display direction of the foldable electronic device.

For example, the threshold 1 may be 10 degrees. If the folding angle C between the primary display screen and the secondary display screen is less than or equal to 10 degrees, it may be considered that the foldable electronic device is in the folded state.

Step S409: Output the direction A (which is an example of a third direction).

It is to be understood that, the direction A may be a direction that is of the interfaces displayed by the primary display screen and the secondary display screen of the foldable electronic device and that is obtained based on the display method provided in embodiments of this application. The direction of the interface that is displayed may be an interface display direction. The interface display direction may be a direction for arranging content information displayed in the interface. Optionally, for detailed descriptions of the display direction, refer to the related descriptions of FIG. 9 and FIG. 10. Details are not described herein again.

It is to be further understood that, the direction A is a direction that indicates the interfaces displayed by the primary display screen and the secondary display screen of the foldable electronic device and that is obtained based on the display method provided in this embodiment of this application. The primary display screen and the secondary display screen of the foldable electronic device may determine, based on whether a screen rotation function is enabled, whether to display the interfaces based on the direction. For example, if both the primary display screen and the secondary display screen enable the screen rotation function, both the direction of the interface displayed by the primary display screen and the direction of the interface displayed by the secondary display screen are the direction A; and if the primary display screen enables the screen rotation function and the secondary display screen does not enable the screen rotation function, the direction of the interface displayed by the primary display screen may be the direction A, and the direction of the interface displayed by the secondary display screen may remain unchanged.

Step S410: Determine whether the folding angle C is less than or equal to a threshold 2, where if yes, step S411 is performed; or if no, step S412 is performed.

In this embodiment of this application, whether the folding angle C is less than or equal to the threshold 2 is determined to determine whether the foldable electronic device is in a process changing from a tent state to a notebook state. In this process, the display direction of the interface displayed by the foldable electronic device may not be changed. The tent state may be shown in (d) in FIG. 4, and the notebook state may be shown in (e) in FIG. 4 or (f) in FIG. 4.

For example, the threshold 2 may be 45 degrees.

It is to be understood that, the threshold 2 is described above by using an example, and a value of the threshold 2 is not limited in this application.

Optionally, when the foldable electronic device is in the tent state, the outer screen of the foldable electronic device can be used.

Step S411: Output a direction P (which is an example of a third direction).

For example, the direction P may be a display direction obtained based on acceleration data of a previous frame of a current moment (for example, the current moment may be a moment t, and the acceleration data of the previous frame of the current moment may be data of an acceleration sensor obtained at a moment t-1). For example, if a direction obtained based on the acceleration data of the previous frame is the direction A, a current display direction is the direction A; and if a display direction obtained on the acceleration data of the previous frame is the direction B, a current display direction is the direction B.

Step S412: Determine whether C is in a first range, where if yes, step S413 is performed; or if no, step S417 is performed.

In this embodiment of this application, whether the folding angle C is in the first range is determined to determine whether the foldable electronic device is currently in the notebook state, where the notebook state may be shown in (e) in FIG. 4 or (f) in FIG. 4.

For example, the first range may be [70, 135].

It is to be understood that, the first range is described above by using an example, and a specific value of the first range is not limited in this application.

Step S413: Determine whether the foldable electronic device is in the notebook state, where if yes, step 414 is performed. if no, step S411 is performed.

Optionally, when whether the foldable electronic device is in the notebook state is determined, consecutive frames of information about the folding angle C may be obtained; whether the folding angle C corresponding to the consecutive frames of data is in the first range is determined; if the consecutive frames of information about the folding angle C is in the first range, it may indicate that the foldable electronic device is in the notebook state; and if some of frames of folding angles C are not in the first range, it may indicate that the foldable electronic device is not in the notebook state.

Step S414: Determine whether the primary display screen is in a horizontal state, where if yes, step S415 is performed; or if no, step S416 is performed.

For example, when the foldable electronic device is in the notebook state, the primary display screen is in the horizontal state, as shown in (f) in FIG. 4. In this case, the direction B corresponding to the acceleration data of the secondary display screen is used as the direction of each of the interfaces displayed by the primary display screen and the secondary display screen of the foldable electronic device.

For example, if the frames of folding angles C are in the first range and any one of the two display screens is in the horizontal state, it may indicate that the foldable electronic device is in the notebook state; or the frames of folding angles C are in the first range and both the two display screens are not in the horizontal state, it may indicate that the foldable electronic device is not in the notebook state; or if the frames of folding angles C are not in the first range and any one of the two display screens is in the horizontal state, it may indicate that the foldable electronic device is not in the notebook state.

It is to be understood that, when the foldable electronic device is in the notebook state shown in (f) in FIG. 4, because the primary display screen is in the horizontal state, if the direction A obtained based on the acceleration data of the primary display screen is used as the direction of each of the interfaces displayed by the primary display screen and the secondary display screen of the foldable electronic device, a problem that the direction of each of the interfaces displayed by the primary display screen and the secondary display screen cannot be automatically adjusted may occur when the foldable electronic device is in a landscape attitude. For example, as shown in (a) in FIG. 6, when the foldable electronic device is in the landscape attitude, the direction of the interface displayed by the foldable electronic device is still the portrait display direction, and the direction of the interface that is displayed is not automatically adjusted to the landscape display direction. Therefore, when the foldable electronic device is in the notebook state and the primary display screen is in the horizontal state, the direction B based on the acceleration data of the secondary display screen may be used as the direction of each of the interfaces displayed by the primary display screen and the secondary display screen, that is, the display direction is the direction B.

Step S415: Output the direction B (which is an example of a third direction).

For example, when the foldable electronic device is in the notebook state and the primary display screen is in the horizontal state, the direction that is of the interfaces displayed by the primary display screen and the secondary display screen of the foldable electronic device and that is outputted is the direction B.

Step S416: Output the direction A (which is an example of a third direction).

For example, when the foldable electronic device is in the notebook state and the primary display screen is not in the horizontal state, the direction that is of the interfaces displayed by the primary display screen and the secondary display screen of the foldable electronic device and that is outputted is the direction A.

Step S417: Determine whether a tag value of the direction A is greater than or equal to a tag value of the direction B, where if yes, step S418 is performed; or if no, step S419 is performed.

For example, it is assumed that a tag value of the portrait display direction is 0, a tag value of the landscape left display direction is 1, a tag value of the reverse portrait display direction is 2, and a tag value of the landscape right display direction is 3, if the tag value of the direction A is 0 and the tag value of the direction B is 1, in this case, the tag value of the direction A is less than the tag value of the direction B, and the display direction is the direction B.

In this embodiment of this application, when the folding angle C is not in the first range, the tag value of the direction A and the tag value of the direction B may be compared, to further output a valid display direction.

Step S418: Output the direction A (which is an example of a third direction).

For example, the direction A may be a direction of each of the interfaces displayed by the primary display screen and the secondary display screen of the foldable electronic device.

Step S419: Output the direction B (which is an example of a third direction).

For example, the direction B may be a direction of each of the interfaces displayed by the primary display screen and the secondary display screen of the foldable electronic device.

Step S420: Store information about the directions.

It is to be understood that, the information about the directions is stored to determine whether there is a need to adjust the display interface of the interface displayed by the foldable electronic device during subsequent determining. For example, if a direction obtained based on data of a previous frame of a current frame is the direction A (for example, the portrait display direction), and a direction obtained based on data of the current frame is also the direction A, the interface displayed by the foldable electronic device may remain unchanged, that is, the foldable electronic device may not adjust the display direction of the interface that is displayed. If the direction obtained based on the data of the previous frame of the current frame is the direction A (for example, the portrait display direction), and the direction obtained based on the data of the current frame is also the direction B (for example, the landscape left display direction), the foldable electronic device needs to adjust the display direction of the interface displayed by the foldable electronic device. Alternatively, when an invalid state is outputted by using a rotation direction recognition algorithm, the information about the stored direction needs to be obtained. For example, when a next frame of data of a current frame is processed based on a display direction recognition algorithm, an output is an invalid state (for example, an invalid value or a flat-lying attitude is outputted). In this case, the direction of the interface displayed by the foldable electronic device is a historical display direction obtained from the stored direction. In other words, when an output obtained by the foldable electronic device based on the rotation direction recognition algorithm is the invalid state, the direction of the interface displayed by the foldable electronic device may be the historical display direction, and the foldable electronic device may not change the display direction of the interface that is displayed.

It is to be understood that, the direction A, the direction B, or the direction P outputted in step S409, step S411, step S415, step S416, step S418, and step S419 shown in FIG. 11 is a direction that indicates the interfaces displayed by the primary display screen and the secondary display screen of the foldable electronic device and that is obtained based on the display method provided in this embodiment of this application. The primary display screen and/or the secondary display screen of the foldable electronic device may perform display based on the direction. For example, the portrait display direction is outputted, if both the primary display screen and the secondary display screen enable the screen rotation function, both the direction of the interface displayed by the primary display screen and the direction of the interface displayed by the secondary display screen are the portrait display direction; and if one or both of the primary display screen or the secondary display screen do not enable the screen rotation function, a display direction of a display screen of the primary display screen or the secondary display screen that does not enable the screen rotation function may be the foregoing display direction, and the interface may not be displayed based on the portrait display direction. Optionally, if the primary display screen enables the screen rotation function and the secondary display screen does not enable the screen rotation function, a current display direction of the secondary display screen is the landscape left display direction, the primary display screen may display the interface based on the portrait display direction, and the secondary display screen may display the interface based on the landscape left display direction.

In embodiments of this application, the foldable electronic device may include the primary display screen and the secondary display screen. The primary display screen corresponds to a first motion sensor, and the secondary display screen corresponds to a second sensor. It may be obtained, based on the first data acquired by the first motion sensor, that the direction of the interface displayed by the primary display screen is the direction A. It may be obtained, based on the second data acquired by the second motion sensor, that the direction of the interface displayed by the secondary display screen is the direction B. The direction of each of the interfaces displayed by the primary display screen and the secondary display screen of the foldable electronic device may be obtained based on the information about the folding angle between the primary display screen and the secondary display screen, the direction A, and the direction B. Compared with determining a display direction of the foldable electronic device based on data acquired by a motion sensor of a primary display screen of the foldable electronic device, in this solution, an outputted direction is determined based on data acquired by a motion sensor corresponding to each display screen of the foldable electronic device and a folding angle between display screens, so that the display method in this solution can ensure that the foldable electronic device can meet users' use requirements in various scenarios, thereby improving user experience.

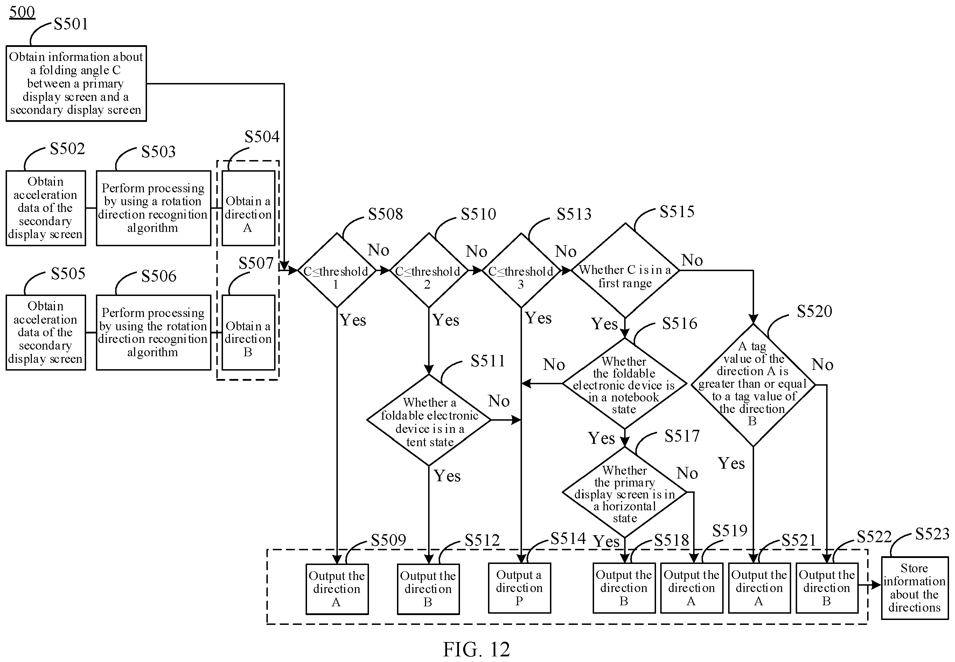

FIG. 12 is a schematic flowchart of a display method according to an embodiment of this application. The method may be performed by the electronic device shown in FIG. 1. The method 500 includes step S501 to step S523. Step S501 to step S523 are respectively described below in detail.

Step S501: Obtain information about a folding angle C between a primary display screen and a secondary display screen.

For example, the foldable electronic device includes a Hall sensor. The Hall sensor may output the information about the folding angle C between the primary display screen and the secondary display screen of the foldable electronic device.

For example, for the foldable electronic device, the information about the folding angle between the primary display screen and the secondary display screen may be obtained based on data of acceleration sensors, gyro sensors, or Hall sensors of the primary display screen and the secondary display screen.

For example, a Hall signal is read through the Hall sensors of the foldable electronic device, and a speed corresponding to the Hall signal is obtained in a table lookup manner. Alternatively, an acceleration signal and an angular velocity signal corresponding to each display screen are respectively read through the acceleration sensors and the gyro sensors disposed on the two display screens of the foldable electronic device. Then, a folded state of the foldable electronic device is detected, and the information about the folding angle C of the foldable electronic device is determined by using different algorithms according to different folded states of the foldable electronic device in combination with two sets of acceleration signals and angular velocity signals or in combination with two sets of angular velocity signals.

It is to be understood that, the manner of obtaining the folding angle is described above by using an example, which is not limited in this application.

Step S502: Obtain acceleration data of the primary display screen.

It should be understood that, the foldable electronic device may include the primary display screen and the secondary display screen. The primary display screen and the secondary display screen may each have an acceleration sensor.

For example, data of the acceleration sensor of the primary display screen may be acquired, to obtain the acceleration data of the primary display screen.

Step S503: Perform processing by using a rotation direction recognition algorithm.

For example, the acceleration data of the primary display screen may be processed by using the rotation direction recognition algorithm, to obtain direction information of the primary display screen.

Optionally, for a specific implementation of the rotation direction recognition algorithm, refer to related descriptions of FIG. 13 below. Details are not described herein again.

It is to be understood that, a direction (for example, a tag value of a display direction) of an interface displayed by one display screen (for example, the primary display screen) may be obtained based on the rotation direction recognition algorithm. The direction of the interface that is displayed may indicate an arrangement manner of content information displayed in the display screen, for example, a portrait display direction, a landscape left display direction, a landscape back display direction, a reverse portrait display direction, or the like. Optionally, for detailed descriptions of the display direction, refer to the related descriptions of FIG. 9 and FIG. 10. Details are not described herein again.

Step S504: Obtain a direction A.

It is to be understood that, the direction A may be a direction of an interface displayed by the primary display screen. In other words, the direction of the interface that is displayed may be considered as an arrangement direction of displayed content.

Optionally, the direction A may be the first direction shown in FIG. 8.

For example, the acceleration data of the primary display screen is processed based on the rotation direction recognition algorithm, so that the direction A of the primary display screen may be obtained. The direction A is the direction of the interface displayed by the primary display screen.

For example, the direction A may include any one of the following display directions:
the portrait display direction, the landscape left display direction, the reverse portrait display direction, or the landscape right display direction. When the foldable electronic device is in the portrait display direction, a charging port of the foldable electronic device is downward. When the foldable electronic device is in the landscape left display direction, the charging port of the foldable electronic device is rightward. When the foldable electronic device is in the reverse portrait display direction, the charging port of the foldable electronic device is upward. When the foldable electronic device is in the landscape right display direction, the charging port of the foldable electronic device is leftward. Optionally, for detailed descriptions of the display direction, refer to the related descriptions of FIG. 9 and FIG. 10. Details are not described herein again.

It is to be understood that, different display directions may correspond to different tag values. For example, a tag value of the portrait display direction may be 0, a tag value of the landscape left display direction may be 1, a tag value of the reverse portrait display direction may be 2, and a tag value of the landscape right display direction may be 3. Different tag values may be outputted based on the rotation direction recognition algorithm, and the different tag values may correspond to different display directions of the display screen.

Optionally, a tag value corresponding to the display direction may further include -1. For example, the tag value -1 may be used for indicating a mistaken rotation instruction. When the tag value -1 is outputted, the display direction of the display interface may not be changed.

Step S505: Obtain acceleration data of the secondary display screen.

For example, data of the acceleration sensor of the secondary display screen may be acquired, to obtain the acceleration data of the primary display screen.

Optionally, before step S502 and step S505 are performed, the acceleration sensor corresponding to the primary display screen and the acceleration sensor corresponding to the secondary display screen of the foldable electronic device may be calibrated.

Step S506: Perform processing by using a rotation direction recognition algorithm.

For example, the acceleration data of the secondary display screen may be processed by using the rotation direction recognition algorithm, to obtain direction information of the secondary display screen.

Optionally, for a specific implementation of the rotation direction recognition algorithm, refer to related descriptions of FIG. 13 below. Details are not described herein again.

It may be understood that, for detailed descriptions of the display direction, refer to the related descriptions of FIG. 9 and FIG. 10. Details are not described herein again.

Optionally, in step S506 and step S503, a same rotation direction recognition algorithm may be used.

Step S507: Obtain a direction B.

Optionally, the direction B may be the second direction shown in FIG. 8.

For example, the acceleration data of the secondary display screen may be processed based on the rotation direction recognition algorithm, to obtain that the direction of the interface displayed by the secondary display screen is the direction B.

For example, the direction B may be any one of the following directions:
the portrait display direction, the landscape left display direction, the reverse portrait display direction, or the landscape right display direction. Optionally, for detailed descriptions, refer to FIG. 9 and FIG. 10. Details are not described herein again.

It is to be understood that, different display directions may correspond to different tag values. For example, a tag value of the portrait display direction may be 0, a tag value of the landscape left display direction may be 1, a tag value of the reverse portrait display direction may be 2, and a tag value of the landscape right display direction may be 3. Different tag values may be outputted based on the rotation direction recognition algorithm, and the different tag values may correspond to different display directions of the display screen.

Optionally, a tag value corresponding to the display direction may further include -1. For example, the tag value -1 may be used for indicating a mistaken rotation instruction. When the tag value -1 is outputted, the display direction of the display interface may not be changed.

Step S508: Determine whether the folding angle C is less than or equal to a threshold 1, where if yes, step S509 is performed; or if no, step S510 is performed.

In this embodiment of this application, whether the folding angle C is less than or equal to the threshold 1 is determined to determine whether the foldable electronic device is in a folded state. If the foldable electronic device is in the folded state, a direction of any display screen may be used as the display direction. For example, if the foldable electronic device is in the folded state, the direction A of the primary display screen may be set as the display direction of the interface of the foldable electronic device.

It is to be understood that, as shown in (b) in FIG. 4, the foldable electronic device is in the folded state. When the foldable electronic device is in the folded state, only an outer screen of the foldable electronic device can be used. In addition, directions of an x-axis and a z-axis obtained based on devices of the primary display screen 201 and the secondary display screen 202 are opposite. Therefore, when the foldable electronic device is in the folded state, a direction outputted by using a rotation direction recognition algorithm of any display screen may be used as the display direction.

For example, the threshold 1 may be 10 degrees. If the folding angle C between the primary display screen and the secondary display screen is less than 10 degrees, it may be considered that the foldable electronic device is in the folded state.

Step S509: Obtain the direction A.

It is to be understood that, the direction A may be a direction that is of the interfaces displayed by the primary display screen and the secondary display screen of the foldable electronic device and that is obtained based on the display method provided in embodiments of this application. The direction of the interface that is displayed may be an interface display direction. The interface display direction may be a direction for arranging content information displayed in the interface. Optionally, for detailed descriptions of the display direction, refer to the related descriptions of FIG. 9 and FIG. 10. Details are not described herein again.

It is to be further understood that, the direction A is a direction that indicates the interfaces displayed by the primary display screen and the secondary display screen of the foldable electronic device and that is obtained based on the display method provided in this embodiment of this application. The primary display screen and the secondary display screen of the foldable electronic device may determine, based on whether a screen rotation function is enabled, whether to display the interfaces based on the direction. For example, if both the primary display screen and the secondary display screen enable the screen rotation function, both the direction of the interface displayed by the primary display screen and the direction of the interface displayed by the secondary display screen are the direction A; and if the primary display screen enables the screen rotation function and the secondary display screen does not enable the screen rotation function, the direction of the interface displayed by the primary display screen may be the direction A, and the direction of the interface displayed by the secondary display screen may remain unchanged.

Step S510: Determine whether the folding angle C is less than or equal to a threshold 2, where if yes, step S511 is performed; or if no, step S512 is performed.

In this embodiment of this application, whether the folding angle C is less than or equal to the threshold 2 is determined to determine whether the foldable electronic device is in a process changing from a tent state to a notebook state. In this process, the direction of the interface displayed by the foldable electronic device may not be changed. The tent state may be shown in (d) in FIG. 4, and the notebook state may be shown in (e) in FIG. 4 or (f) in FIG. 4.

For example, the threshold 2 may be 45 degrees.

It is to be understood that, the threshold 2 is described above by using an example, and a value of the threshold 2 is not limited in this application.

Optionally, when the foldable electronic device is in the tent state, the outer screen of the foldable electronic device can be used.

Step S511: Determine whether the foldable electronic device is in the tent state, where if yes, step S512 is performed; or if no, step S514 is performed.

Optionally, when whether a foldable screen is in the tent state is determined, a plurality of frames of data may be obtained. If folding angles C corresponding to the plurality of frames of data are the same, and each folding angle of the folding angles C corresponding to the plurality of frames of data is in a range of [threshold 1, threshold 2], it may indicate that the foldable electronic device is in the tent state.

Optionally, when whether a foldable screen is in the tent state is determined, a plurality of frames of data may be obtained. If folding angles C corresponding to the plurality of frames of data are the same, and each folding angle of the folding angles C corresponding to the plurality of frames of data is in a range of [threshold 1, threshold 2]. In addition, if an amplitude of the z-axis of the two display screens is less than a threshold 4 (for example, 20), it may indicate that the foldable electronic device is in the tent state.

Step S512: Obtain the direction B.

For example, when the foldable electronic device is in the tent state, the display direction of the foldable electronic device is the direction B obtained based on the acceleration data of the secondary display screen. When the foldable electronic device is in the tent state, an outer screen of the foldable electronic device can perform display. Generally, the outer screen and a secondary display screen of the foldable electronic device are usually located on two different sides of one surface, and in this case, the direction B obtained based on the secondary display screen may be used as the display direction of the foldable electronic device, that is, the outputted direction is the direction B.

Step S513: Determine whether the folding angle C is less than or equal to a threshold 3, where if yes, step S514 is performed; or if no, step S515 is performed.

For example, the threshold 3 may be 70 degrees.

In this embodiment of this application, whether the folding angle C is less than or equal to the threshold 3 is determined to determine whether the foldable electronic device is in an intermediate attitude. For example, whether the foldable electronic device is in a process changing from the tent state to the notebook state is determined. In this process, the direction of the interface displayed by the foldable electronic device may not be changed.

Step S514: Output a direction P.

For example, the direction P may be a display direction obtained based on acceleration data of a previous frame of a current moment (for example, the current moment may be a moment t, and the acceleration data of the previous frame of the current moment may be data of an acceleration sensor obtained at a moment t-1). For example, if a direction obtained based on the acceleration data of the previous frame is the direction A, a current display direction is the direction A; and if a display direction obtained on the acceleration data of the previous frame is the direction B, a current display direction is the direction B.

Step S515: Determine whether C is in a first range, where if yes, step S516 is performed; or if no, step S520 is performed.

In this embodiment of this application, whether the folding angle C is in the first range is determined to determine whether the foldable electronic device is currently in the notebook state, where the notebook state may be shown in (e) in FIG. 4 or (f) in FIG. 4.

For example, the first range may be [70, 135].

It is to be understood that, the first range is described above by using an example, and a specific value of the first range is not limited in this application.

Step S516: Determine whether the foldable electronic device is in the notebook state, where if yes, step S517 is performed; or if no, step S514 is performed.

Optionally, when whether the foldable electronic device is in the notebook state is determined, consecutive frames of information about the folding angle C may be obtained; whether the folding angle C corresponding to the consecutive frames of data is in the first range is determined; if the consecutive frames of information about the folding angle C is in the first range, it may indicate that the foldable electronic device is in the notebook state; and if some of frames of folding angles C are not in the first range, it may indicate that the foldable electronic device is not in the notebook state.

Step S517: Determine whether the primary display screen is in a horizontal state, where if yes, step S518 is performed; or if no, step S519 is performed.

For example, when the foldable electronic device is in the notebook state, the primary display screen is in the horizontal state, as shown in (f) in FIG. 4. In this case, the direction B obtained based on the acceleration data of the secondary display screen is used as the direction of each of the interfaces displayed by the primary display screen and the secondary display screen of the foldable electronic device.

For example, if the frames of folding angles C are in the first range and any one of the two display screens is in the horizontal state, it may indicate that the foldable electronic device is in the notebook state; or the frames of folding angles C are in the first range and both the two display screens are not in the horizontal state, it may indicate that the foldable electronic device is not in the notebook state; or if the frames of folding angles C are not in the first range and any one of the two display screens is in the horizontal state, it may indicate that the foldable electronic device is not in the notebook state.

It is to be understood that, when the foldable electronic device is in the notebook state shown in (f) in FIG. 4, because the primary display screen is in the horizontal state, if the direction A corresponding to the acceleration data of the primary display screen is used as the direction of each of the interfaces displayed by the primary display screen and the secondary display screen of the foldable electronic device, a problem that the foldable electronic device cannot automatically adjust the display direction may occur. For example, as shown in (a) in FIG. 6, when the foldable electronic device is in the landscape attitude, the interface displayed by the foldable electronic device is still in the portrait display direction, the display direction of the interface that is displayed is not adjusted based on the landscape attitude of the foldable electronic device. Therefore, when the foldable electronic device is in the notebook state and the primary display screen is in the horizontal state, the direction B corresponding to the acceleration data of the secondary display screen is used as the direction of each of the interfaces displayed by the primary display screen and the secondary display screen of the foldable electronic device, that is, the display direction is the direction B.

Step S518: Obtain the direction B.

For example, when the foldable electronic device is in the notebook state and the primary display screen is in the horizontal state, the direction that is of the interfaces displayed by the primary display screen and the secondary display screen of the foldable electronic device and that is outputted is the direction B.

Step S519: Obtain the direction A.

For example, when the foldable electronic device is in the notebook state and the primary display screen is not in the horizontal state, the direction that is of the interfaces displayed by the primary display screen and the secondary display screen of the foldable electronic device and that is outputted is the direction A.

Step S520: Determine whether a tag value of the direction A is greater than or equal to a tag value of the direction B, where if yes, step S521 is performed; or if no, step S522 is performed.

For example, it is assumed that a tag value of the portrait display direction is 0, a tag value of the landscape left display direction is 1, a tag value of the reverse portrait display direction is 2, and a tag value of the landscape right display direction is 3, if the tag value of the direction A is 0 and the tag value of the direction B is 1, in this case, the tag value of the direction A is less than the tag value of the direction B, and the display direction is the direction B.

In this embodiment of this application, when the folding angle C is not in the first range, the tag value of the direction A and the tag value of the direction B may be compared, to further output a valid display direction.

Step S521: Obtain the direction A.

For example, the direction A may be a direction of each of the interfaces displayed by the primary display screen and the secondary display screen of the foldable electronic device.

Step S522: Obtain the direction B.

For example, the direction B may be a direction of each of the interfaces displayed by the primary display screen and the secondary display screen of the foldable electronic device.

Step S523: Store information about the current directions.

It is to be understood that, the information about the direction is stored to determine whether there is a need to adjust the display interface of the interface displayed by the foldable electronic device during subsequent determining. For example, if a direction obtained based on data of a previous frame of a current frame is the direction A (for example, the portrait display direction), and a direction obtained based on data of the current frame is also the direction A, the interface displayed by the foldable electronic device may remain unchanged, that is, the foldable electronic device may not adjust the display direction of the interface that is displayed. If the direction obtained based on the data of the previous frame of the current frame is the direction A (for example, the portrait display direction), and the direction obtained based on the data of the current frame is the direction B (for example, the landscape left display direction), the foldable electronic device needs to adjust the display direction of the interface displayed by the foldable electronic device. Alternatively, when an invalid state is outputted by using a rotation direction recognition algorithm, the information about the stored direction needs to be obtained. For example, when a next frame of data of a current frame is processed based on a display direction recognition algorithm, an output is an invalid state (for example, an invalid value or a flat-lying attitude is outputted). In this case, the direction of the interface displayed by the foldable electronic device is a historical display direction obtained from the stored direction. In other words, when an output obtained by the foldable electronic device based on the rotation direction recognition algorithm is the invalid state, the direction of the interface displayed by the foldable electronic device may be the historical display direction, and the foldable electronic device may not change the display direction of the interface that is displayed.

It is to be understood that, the direction A, the direction B, or the direction P outputted in step S509, step S512, step S514, step S518, step S519, step S521, and step S522 shown in FIG. 12 is a direction that indicates the interfaces displayed by the primary display screen and the secondary display screen of the foldable electronic device and that is obtained based on the display method provided in this embodiment of this application. The primary display screen and/or the secondary display screen of the foldable electronic device may perform display based on the direction. For example, the portrait display direction is outputted, if both the primary display screen and the secondary display screen enable the screen rotation function, both the direction of the interface displayed by the primary display screen and the direction of the interface displayed by the secondary display screen are the portrait display direction; and if one or both of the primary display screen or the secondary display screen do not enable the screen rotation function, a display direction of a display screen of the primary display screen or the secondary display screen that does not enable the screen rotation function may be the foregoing display direction, and the interface may not be displayed based on the portrait display direction. Optionally, if the primary display screen enables the screen rotation function and the secondary display screen does not enable the screen rotation function, a current display direction of the secondary display screen is the landscape left display direction, the primary display screen may display the interface based on the portrait display direction, and the secondary display screen may display the interface based on the landscape left display direction.

In embodiments of this application, the foldable electronic device may include the primary display screen and the secondary display screen. The primary display screen corresponds to a first motion sensor, and the secondary display screen corresponds to a second sensor. It may be obtained, based on the first data acquired by the first motion sensor, that the direction of the interface displayed by the primary display screen is the direction A. It may be obtained, based on the second data acquired by the second motion sensor, that the direction of the interface displayed by the secondary display screen is the direction B. The direction of each of the interfaces displayed by the primary display screen and the secondary display screen of the foldable electronic device may be obtained based on the information about the folding angle between the primary display screen and the secondary display screen, the direction A, and the direction B. Compared with determining a display direction of the foldable electronic device based on data acquired by a motion sensor of a primary display screen of the foldable electronic device, in this solution, an outputted direction is determined based on data acquired by a motion sensor corresponding to each display screen of the foldable electronic device and a folding angle between display screens, so that the display method in this solution can ensure that the foldable electronic device can meet users' use requirements in various scenarios, thereby improving user experience.

For example, the rotation direction recognition algorithm in embodiments of this application is described in detail below with reference to FIG. 13.

Optionally, a rotation recognition algorithm shown in FIG. 13 may be used to perform step S320 and step S330 shown in FIG. 8, or may be used to perform step S403 and step S406 shown in FIG. 11, or may be used to perform step S503 and step S506 shown in FIG. 12 partially or completely.

FIG. 13 is a schematic flowchart of a rotation direction recognition method according to an embodiment of this application. The method may be performed by the electronic device shown in FIG. 1. The method 600 includes step S601 to step S614. Step S601 to step S614 are respectively described below in detail.

It is to be understood that, the rotation direction recognition method shown in FIG. 13 is used for outputting a direction of an interface displayed by one display screen. For the foldable electronic device, as shown in (a) in FIG. 4, the rotation direction recognition algorithm may respectively be executed on the primary display screen 202 and the secondary display screen 201, to respectively obtain a direction of an interface displayed by the primary display screen 202 and a direction of an interface displayed by the secondary display screen 201.

For example, that the primary display screen 202 of the foldable screen executes the rotation direction recognition method may be described by using an example. Step S601 to step S614 are similarly applicable to the secondary display screen of the foldable electronic device.

Step S601: Obtain acceleration data of a current frame.

For example, when the direction of the interface displayed by the primary display screen of the foldable electronic device is determined, that is, a display direction of the primary display screen is determined, acceleration data of a current frame in the acceleration sensor of the primary display screen may be obtained.

Step S602: Determine whether a modulus value is greater than a first threshold, where if the modulus value is greater than the first threshold, step S603 and step S604 are performed; and if the modulus value is less than or equal to the first threshold, step S605 is performed.

For example, a module of acceleration data may be equal to a sum of three-axis acceleration.

Optionally, the first threshold may be a standard module. For example, the first threshold may be 980.

Optionally, the first threshold may be any value in a range of 900 to 1100.

In this embodiment of this application, step S602 and step S606 are performed to determine whether the foldable electronic device is in a stable state. If a modulus value of the acceleration data is not beyond a first range, and a frame amplitude difference between two consecutive frames of acceleration data is not beyond a second range, it indicates that the foldable electronic device is in the stable state. If it is recognized that the foldable electronic device is not in the stable state (for example, in a shaking state), an invalid direction may be outputted. For example, step S604 is performed to output an invalid value. In addition, when the foldable electronic device is not in the stable state, acceleration data of a previous frame may be covered by using the acceleration data of the current frame.

Step S603: Output an invalid value.

For example, the invalid value may be a preset threshold. For example, the invalid value may be -2.

Step S604: Cover acceleration data of a previous frame.

For example, the acceleration data of the current frame is X1, X1=A, and the acceleration data of the previous frame of the current frame is X0, X0=B. Covering the acceleration data of the previous frame based on the acceleration data of the current frame may be to replace the acceleration data of the previous frame with the acceleration data of the current frame, that is, X0=A.

Step S605: Obtain the acceleration data of the previous frame when the modulus value is less than or equal to the first threshold.

For example, the acceleration data of the previous frame may be the acceleration data of the previous frame of the current frame.

Step S606: Determine whether a frame amplitude difference between the acceleration data of the current frame and the acceleration data of the previous frame is greater than a second threshold, where if a frame amplitude is greater than the second threshold, step S603 and step S604 are performed; and if the frame amplitude difference is less than or equal to the second threshold, step S607 is performed.

It is to be understood that, if the acceleration data of the current frame is less than or equal to the first threshold, and the frame amplitude difference between the acceleration data of the current frame and the acceleration data of the previous frame is less than or equal to the second threshold, it indicates that the foldable electronic device is in the stable state.

Optionally, the second threshold may be 160.

For example, whether the frame amplitude difference between the acceleration data of the current frame and the acceleration data of the previous frame is greater than 160 is determined, to determine whether the foldable electronic device is in a relatively stable state.

Step S607: Determine whether an amplitude of a Y-axis is 0, where if the amplitude of the Y-axis is 0, step S603 and step S604 are performed; and if the amplitude of the Y-axis is not 0, step S608 is performed.

It should be understood that, when the amplitude of the Y-axis is 0, step S611 cannot be performed. In other words, when the amplitude of the Y-axis is 0, a valid rotation angle b cannot be obtained.

Step S608: Calculate an inclination angle a of a display screen when the amplitude of the Y-axis is not 0.

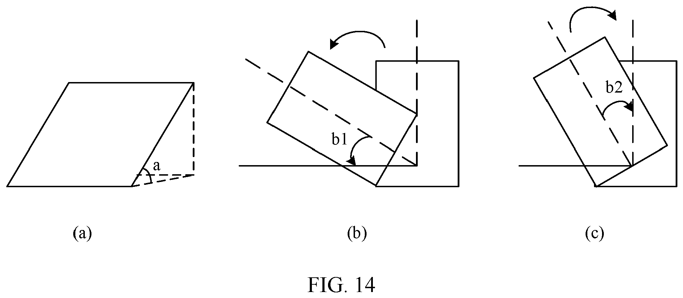

For example, as shown in (a) in FIG. 14, the inclination angle a of the display screen may be an included angle between the display screen and a horizontal plane. The foldable electronic device usually includes two display screens. For the foldable electronic device, an inclination angle a between a primary display screen and the horizontal plane, and an inclination angle a between a secondary display screen and the horizontal plane may be respectively calculated.

Step S609: Determine whether the inclination angle a is less than 45 degrees, where if the inclination angle is less than 45 degrees, step S610 and step S604 are performed; and if the inclination angle is greater than or equal to 45 degrees, step S611 is performed.

Optionally, *a = arcsin( z* / *( x*² *+ y*² + *z*² *)*, where a represents the inclination angle, x represents an amplitude of the x-axis, y represents an amplitude of the y-axis, and z represents an amplitude of the z-axis.

Step S610: Output a flat-lying attitude.

It is to be understood that, the flat-lying attitude may mean that an included angle between the display screen of the foldable electronic device and the horizontal plane is small. For example, when the included angle between the display screen and the horizontal plane is approximated as 0, it may indicate that the foldable electronic device is horizontally placed on a table. In this case, it may indicate that the foldable electronic device is in the flat-lying attitude.

For example, in this embodiment of this application, a tag value outputted corresponding to the flat-lying attitude may be -1. When the foldable electronic device is in the flat-lying attitude, if it is detected that the foldable electronic device restarts an application, a default rotation state may be used. For example, the default rotation state may be a portrait state. When the foldable electronic device is in the flat-lying attitude, if it is not detected that the foldable electronic device restarts an application, the display direction of the display interface of the foldable electronic device may not be changed.

Optionally, after the flat-lying attitude is outputted, step S604 may further be performed, that is, the acceleration data of the previous frame is covered. Because determining in step S606 needs to be performed based on a frame amplitude difference between two frames of acceleration data, Therefore, when the display direction of the foldable electronic device changes, the acceleration data of the previous frame needs to be updated in real time based on the acceleration data of the current frame.

Step S611: Calculate a rotation angle b.

Optionally, *b = arctan 2(-x* / *y),* where b represents the rotation angle, x represents an amplitude of the x-axis, and y represents an amplitude of the y-axis.

Optionally, if the foldable electronic device is rotated from the portrait state to a landscape state, a rotation angle may be b1, as shown in (b) in FIG. 14.

Optionally, if the foldable electronic device is rotated from the landscape state to the portrait state, a rotation angle may be b2, as shown in (c) in FIG. 14. Step S612: Perform angle correction on the rotation angle.

For example, angle correction may be normalization processing on the rotation angles. Generally, an actual rotation angle may be in a range of -180° to 180°. The direction of the interface displayed by the display screen, that is, the display direction may include: the portrait display direction, the landscape left display direction, the reverse portrait display direction, the landscape right display direction, or the like. Rotation angles corresponding to the display directions may usually be 0°, 90°, 180°, 270°, or the like. Therefore, the actual rotation angles are normalized to any one of 0°, 90°, 180°, or 270°, to further determine a corresponding display direction.

Step S613: Calculate the direction.

For example, the direction of the interface displayed by the display screen may be calculated in real time based on an angle after angle correction.

In an example, in the process of rotating from the landscape state to the portrait state, if the rotation angle after angle correction is 0°, the direction of the interface that is displayed may be the landscape left display direction; if the rotation angle after angle correction is 90°, the direction of the interface that is displayed may be the portrait display direction; if the rotation angle after angle correction is 180°, the direction of the interface that is displayed may be the landscape right display direction; and if the rotation angle after angle correction is 270°, the direction of the interface that is displayed may be the reverse portrait display direction;

In an example, in the process of rotating from the portrait state to the landscape state, if the rotation angle after angle correction is 0°, the direction of the interface that is displayed may be the portrait display direction; if the rotation angle after angle correction is 90°, the direction of the interface that is displayed may be the landscape left display direction; if the rotation angle after angle correction is 180°, the direction of the interface that is displayed may be the reverse portrait display direction; and if the rotation angle after angle correction is 270°, the direction of the interface that is displayed may be the landscape right display direction.

Optionally, after the direction is calculated, step S604 may be performed.

Step S614: Output the direction.

For example, the direction may include any one of the following:

the portrait display direction, the landscape left display direction, the reverse portrait display direction, or the landscape right display direction. The portrait display direction may be a display direction in which a charging port of the foldable electronic device is downward. The landscape left display direction may be a display direction in which the charging port of the foldable electronic device is rightward. The reverse portrait display direction may be a display direction in which the charging port of the foldable electronic device is upward. The landscape right display direction may be a display direction in which the charging port of the foldable electronic device is leftward.

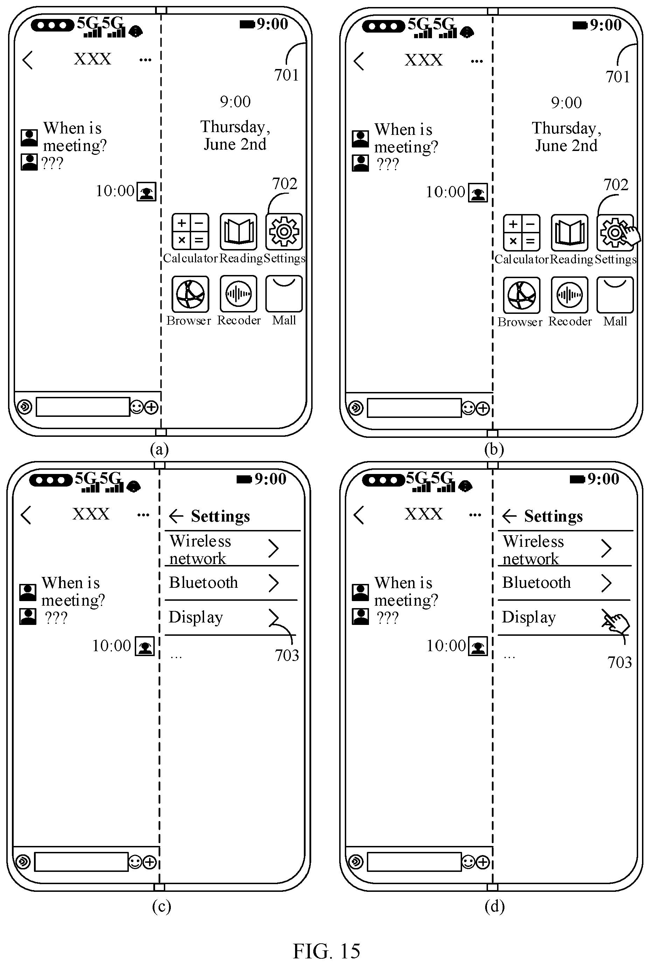

With reference to FIG. 15 to FIG. 22, a schematic diagram of an interface in which the foldable electronic device enables automatic screen rotation and performs the display method in embodiments of this application is described below by using an example.

In an example, in a graphical user interface (graphical user interface, GUI) shown in (a) in FIG. 15, the primary display screen of the foldable electronic device displays a home screen 701 of the foldable electronic device, and the secondary display screen displays an interface of a running application The home screen 701 includes an icon 702 of Settings. As shown in (b) in FIG. 15, the electronic device detects an operation of tapping the icon 702 of Settings on the home screen 701 by a user. After detecting the operation of tapping the icon 702 of Settings on the home screen 701 by the user, the electronic device may display a display interface shown in (c) in FIG. 15. In the display interface shown in (c) in FIG. 15, the primary display screen displays a display interface of Settings, and the secondary display screen displays an interface of a running application. The display interface of Settings may include controls for a wireless network, Bluetooth, or display, for example, including a control 703 for display. The foldable electronic device detects an operation on the control 703 for display, as shown in (d) in FIG. 15. After detecting the operation on the control 703 for display, the foldable electronic device may enter a display setting interface.

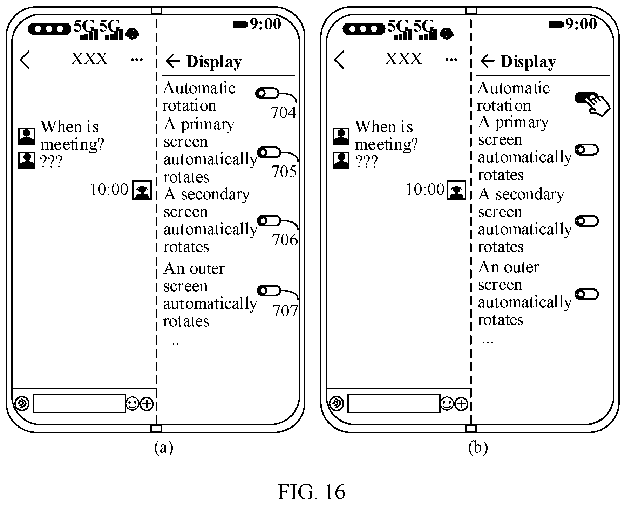

In an example, as shown in (a) in FIG. 16, the display setting interface may further include an automatic rotation control 704, a primary screen automatic rotation control 705, a secondary screen automatic rotation control 706, or an outer screen automatic rotation control 707.

It is to be understood that, the automatic rotation control 704 may be a master control for automatic rotation. In other words, after the automatic rotation control 704 is enabled, primary screen automatic rotation, secondary screen automatic rotation, and outer screen automatic rotation may be automatically enabled. Primary screen automatic rotation, secondary screen automatic rotation, and outer screen automatic rotation may be independent of each other.

Optionally, as shown in (b) in FIG. 16, after the foldable electronic device detects that the user taps the automatic rotation control 704, primary screen automatic rotation, secondary screen automatic rotation, and outer screen automatic rotation of the foldable electronic device may be enabled by default.

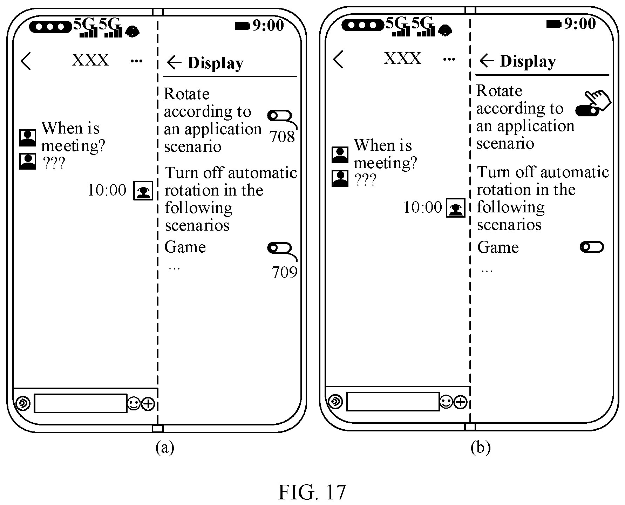

In an example, as shown in (a) in FIG. 17, the display setting interface may include a control 708 that automatically rotates according to an application scenario. As shown in (b) in FIG. 17, the foldable electronic device detects an operation of tapping the control 708 that automatically rotates according to an application scenario. After the foldable electronic device detects the operation of tapping the control 708 that automatically rotates according to an application scenario, the foldable electronic device may enable a function of automatically rotating according to an application scenario. The user may set a scenario for disabling automatic rotation. For example, the display setting interface shown in (a) in FIG. 17 further includes a game control 709, and the user may perform setting to disable automatic rotation during gaming.

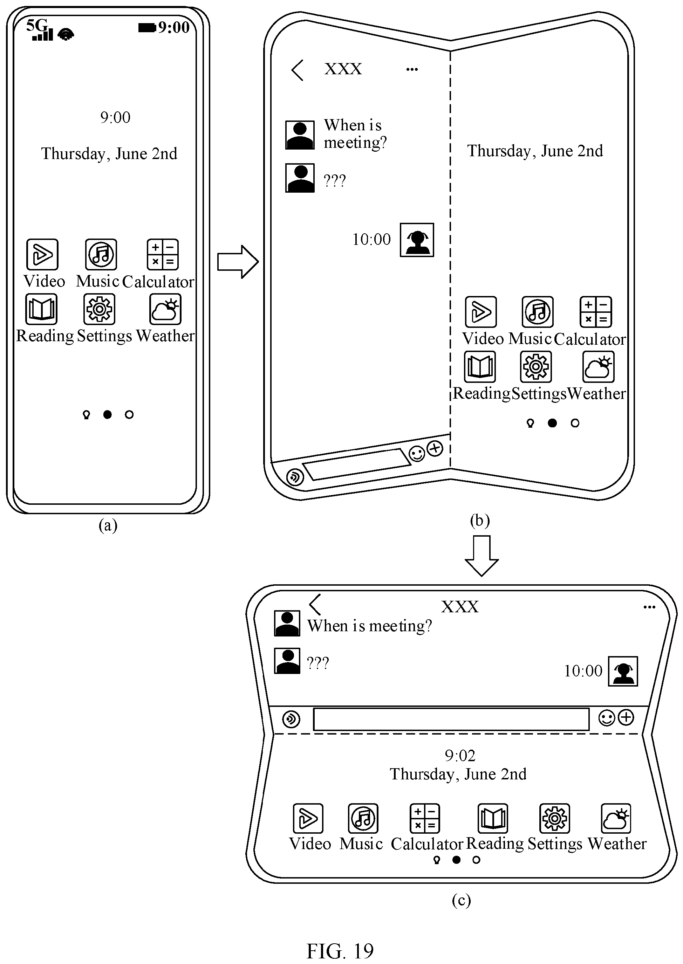

In an example, with reference to FIG. 19, a display direction of a display screen in which the foldable electronic device is in transition from a folded state to a half-unfolded state and is in transition from the half-unfolded state to an unfolded state is described by using an example. As shown in (b) in FIG. 19, the foldable electronic device is in the folded state. When the foldable electronic device is in the folded state, the display direction of the display screen may be a default display direction. For example, the default display direction may be the portrait display direction. As shown in (b) in FIG. 19, the foldable electronic device is in the half-unfolded state (for example, a tent state or a notebook state), and in this case, the display direction of the foldable electronic device may be the portrait display direction. As shown in (c) in FIG. 19, the foldable electronic device is in the unfolded state, and in this case, the display direction of the foldable electronic device may be the landscape display direction.

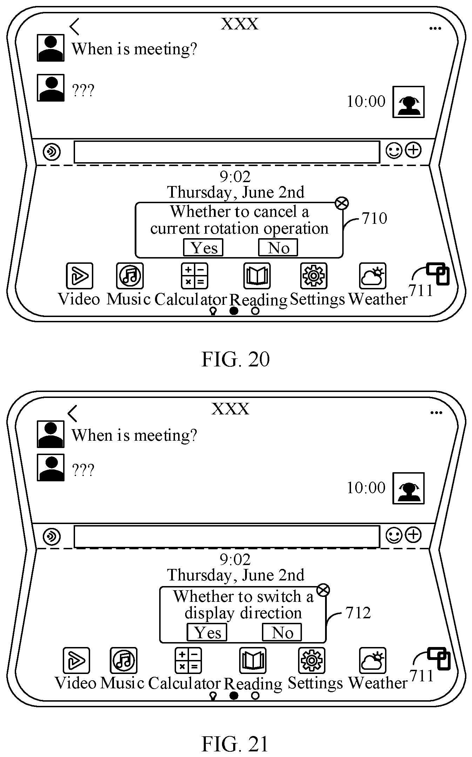

Optionally, after the foldable electronic device is rotated from the portrait state to the landscape state, the display direction of the foldable electronic device may be automatically rotated. As shown in FIG. 20, after the display direction of the foldable electronic device is automatically rotated, the primary display screen of the foldable electronic device may display a prompt box 710. The prompt box 710 is used for prompting the user whether to cancel a current rotation operation. If the foldable electronic device detects that the user taps "yes", the foldable electronic device may switch to an original display direction, for example, may be switched to the portrait display direction. If the foldable electronic device detects that the user taps "no", the foldable electronic device may remain a current display direction unchanged.

Optionally, as shown in FIG. 20, the primary display screen of the foldable electronic device may further include a control 711 for instructing rotation. If the foldable electronic device detects that the user taps the control 711, the foldable electronic device may switch the display direction.

Optionally, after the foldable electronic device is rotated from the portrait state to the landscape state, the display direction of the foldable electronic device may be automatically rotated. As shown in FIG. 21, after the display direction of the foldable electronic device is automatically rotated, the primary display screen of the foldable electronic device may display a prompt box 712. The prompt box 712 is used for prompting the user whether to switch the display direction. If the foldable electronic device detects that the user taps "yes", the foldable electronic device may switch to an original display direction, for example, may be switched to the portrait display direction. If the foldable electronic device detects that the user taps "no", the foldable electronic device may remain a current display direction unchanged.

Optionally, as shown in FIG. 21, the primary display screen of the foldable electronic device may further include a control 711 for instructing rotation. If the foldable electronic device detects that the user taps the control 711, the foldable electronic device may switch the display direction.

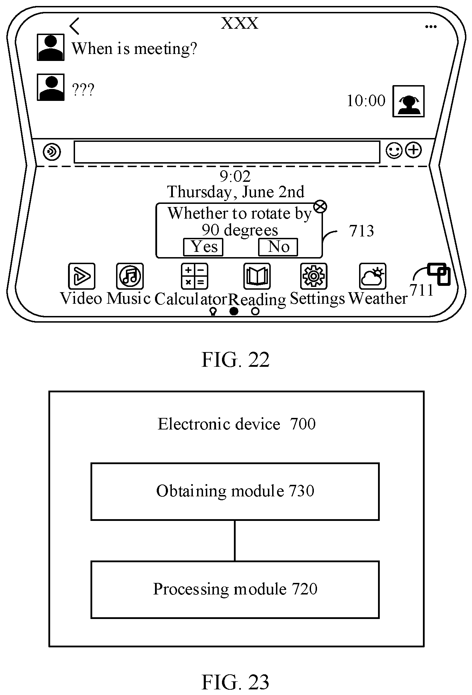

Optionally, after the foldable electronic device is rotated from the portrait state to the landscape state, the display direction of the foldable electronic device may be automatically rotated. As shown in FIG. 22, after the display direction of the foldable electronic device is automatically rotated, the primary display screen of the foldable electronic device may display a prompt box 713. The prompt box 713 is used for prompting the user whether to rotate the display direction (for example, whether to rotate by 90 degrees). If the foldable electronic device detects that the user taps "yes", the foldable electronic device may rotate the display direction. If the foldable electronic device detects that the user taps "no", the foldable electronic device may remain a current display direction unchanged.

Optionally, as shown in FIG. 22, the primary display screen of the foldable electronic device may further include a control 711 for instructing rotation. If the foldable electronic device detects that the user taps the control 711, the foldable electronic device may switch the display direction.

In embodiments of this application, the foldable electronic device may include the first display screen and the second display screen. The first display screen corresponds to the first motion sensor, and the second display screen corresponds to a second sensor. It may be obtained, based on the first data acquired by the first motion sensor, that the direction of the interface displayed by the first display screen is the first direction. It may be obtained, based on the second data acquired by the second motion sensor, that the direction displayed by the second display screen is the second direction. It may be obtained, based on the information about the folding angle between the first display screen and the second display screen, the first direction, and the second direction, that the direction of each of the interfaces displayed by the first display screen and the second display screen of the foldable electronic device is the third direction. The first display screen and/or the second display screen may display the interface based on the third direction. Compared with determining a display direction of the foldable electronic device based on data acquired by a motion sensor of a primary display screen of the foldable electronic device, in this solution, the third direction is determined based on data acquired by a motion sensor corresponding to each display screen of the foldable electronic device and a folding angle between display screens, so that the display method in this solution can ensure that the foldable electronic device can meet users' use requirements in various scenarios, thereby improving user experience.

It is to be understood that, the descriptions of examples are intended to help a person skilled in the art understand embodiments of this application, but are not intended to limit embodiments of this application to specific values or specific scenarios in the examples. A person skilled in the art may apparently make various equivalent modifications or changes based on the above examples, and such modifications or changes also fall within the scope of embodiments of this application.

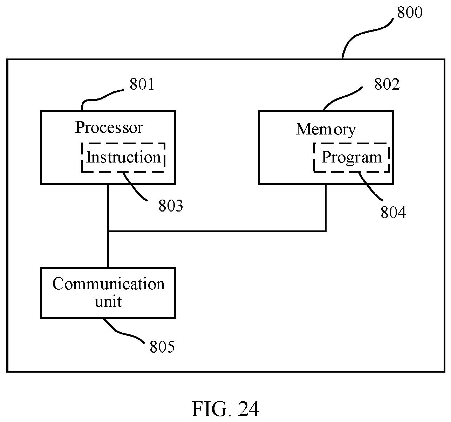

The display method provided in embodiments of this application is described in detail above with reference to FIG. 1 to FIG. 22. Apparatus embodiments of this application are described in detail below with reference to FIG. 23 and FIG. 24. It is to be understood that, the apparatus in this embodiment of this application may perform the method in embodiments of this application. In other words, for specific working processes of the following products, refer to corresponding processes in the foregoing method embodiments.

FIG. 23 is a schematic structural diagram of an electronic device according to an embodiment of this application. The electronic device 700 includes an obtaining module 730 and a processing module 720.

Optionally, the electronic device 700 may be a foldable electronic device, including a first display screen, a second display screen, a first motion sensor, and a second motion sensor.

The obtaining module 730 is configured to obtain first data, second data, and information about a folding angle, where the first data is data of the first display screen acquired by the first motion sensor, the second data is data of the second display screen acquired by the second motion sensor, and the folding angle is an included angle between the first display screen and the second display screen. The processing module 720 is configured to: obtain a first direction based on the first data, where the first direction is a direction of an interface displayed by the first display screen; obtain a second direction based on the second data, where the second direction is a direction of an interface displayed by the second display screen; obtain a third direction based on the information about the folding angle, the first direction, and the second direction, where the third direction is a direction of each of the interfaces displayed by the first display screen and the second display screen; and display, by the first display screen and/or the second display screen, the interface based on the third direction.

Optionally, in an embodiment, the processing module 720 is specifically configured to:
determine a current attitude of the foldable electronic device based on the information about the folding angle, where the current attitude is used for indicating a current unfolded state or folded state of the foldable electronic device; and
obtain the third direction based on the current attitude, the first direction, and the second direction.

Optionally, in an embodiment, the processing module 720 is specifically configured to:
determine that the current attitude is a folded attitude when the folding angle is less than or equal to a first preset threshold;
determine that the current attitude is an intermediate attitude when the folding angle is less than or equal to a second preset threshold, where the intermediate attitude is used for indicating an instantaneous attitude of the foldable electronic device, and the second preset threshold is greater than the first preset threshold; and
determine that the current attitude is a first unfolded attitude when the folding angle is in a first preset range and the first display screen is in a horizontal state.

Optionally, in an embodiment, the processing module 720 is specifically configured to:
determine that the current attitude is a folded attitude when the folding angle is less than or equal to a first preset threshold;
determine that the current attitude is an intermediate attitude when the folding angle is less than or equal to a second preset threshold, where the intermediate attitude is used for indicating an instantaneous attitude of the foldable electronic device, and the second preset threshold is greater than the first preset threshold; and
determine that the current attitude is a first unfolded attitude when the folding angle is in a first preset range and the first display screen is in a horizontal state.

Optionally, in an embodiment, the folding angle is the included angle that is between the first display screen and the second display screen and that is obtained at the moment t, and the processing module 720 is further configured to:
obtain a first data set, where the first data frame set includes the included angle that is between the first display screen and the second display screen and that is obtained at the moment t; and
determine that the current attitude is the first unfolded attitude when the included angle in the first data set is in the first preset range, and the first display screen is in the horizontal state.

Optionally, in an embodiment, the processing module 720 is further configured to:
determine that the current attitude is a second unfolded attitude when the folding angle is less than or equal to a third preset threshold, where the third preset threshold is greater than the first preset threshold and less than the second preset threshold.

Optionally, in an embodiment, the folding angle is the included angle that is between the first display screen and the second display screen and that is obtained at the moment t, and the processing module 720 is further configured to:
obtain a second data set, where the second data frame set includes the included angle that is between the first display screen and the second display screen and that is obtained at the moment t; and
determine that the current attitude is the second unfolded attitude when the included angle in the second data set is less than or equal to the third preset threshold.

Optionally, in an embodiment, the first display screen is a primary display screen of the foldable electronic device, and when the current attitude is the folded attitude, the third direction is the same as the first direction.

Optionally, in an embodiment, the first data, the second data, and the information about the folding angle are data obtained at the moment t, and when the current attitude is the intermediate attitude, the third direction is a historical direction, where the historical direction is a direction that is of the interfaces displayed by the first display screen and the second display screen and that is obtained based on data obtained at a moment t-1.

Optionally, in an embodiment, the first display screen is a primary display screen of the foldable electronic device, and when the current attitude is the first unfolded attitude, the third direction is the same as the second direction.

Optionally, in an embodiment, the first display screen is a primary display screen of the foldable electronic device, and when the current attitude is the second unfolded attitude, the third direction is the same as the second direction.

Optionally, in an embodiment, the processing module 720 is further configured to:
when the folding angle is not in the first preset range, if a tag value of the first direction is greater than or equal to a tag value of the second direction, the third direction is the same as the first direction; or
if a tag value of the first direction is less than a tag value of the second direction, the third direction is the same as the second direction.

Optionally, in an embodiment, the processing module 720 is further configured to:
store the third direction.

Optionally, in an embodiment, the processing module 720 is specifically configured to:
display, by the first display screen and the second display screen, the interfaces based on the third direction.

Optionally, in an embodiment, the processing module 720 is specifically configured to:
detect a first operation on the first display screen, where the first operation is an operation for instructing the first display screen to enable screen rotation;
display, by the first display screen in response to the first operation, the interface based on the third direction;
detect a second operation on the second display screen, where the second operation is an operation for instructing the second display screen to enable screen rotation; and
display, by the second display screen in response to the second operation, the interface based on the third direction.

Optionally, in an embodiment, the processing module 720 is specifically configured to:
detect a third operation on the first display screen, where the third operation is an operation of instructing the first display screen and the second display screen to enable screen rotation; and
display, by the first display screen and the second display screen in response to the third operation, the interfaces based on the third direction.

Optionally, in an example, the first data, the second data, and the information about the folding angle are data obtained at the moment t, and the obtaining module 730 is further configured to:
obtain interface display data at the moment t-1; and
the processing module 720 is further configured to:
display, by the first display screen and/or the second display screen, the interface based on the interface display data at the moment t-1 and the third direction.

Optionally, in an embodiment, the processing module 720 is specifically configured to:
process the first data by using a rotation direction recognition algorithm, to obtain the first direction.

Optionally, in an embodiment, the processing module 720 is specifically configured to:
process the second data by using the rotation direction recognition algorithm, to obtain the second direction.

It is to be noted that, the electronic device 700 is embodied in the form of a functional module. The term "module" herein may be implemented in a form of software and/or hardware, which is not specifically limited.

For example, the "module" may be a software program, a hardware circuit, or a combination of a software program and a hardware circuit that implements the above functions. The hardware circuit may include an application specific integrated circuit (application specific integrated circuit, ASIC), an electronic circuit, a processor (for example, a shared processor, a special purpose processor, or a group processor) configured to execute one or more software or firmware programs, a memory, a combinational logical circuit, and/or another suitable component that supports the described functions.

Therefore, the units in the examples described in embodiments of this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it is not to be considered that the implementation goes beyond the scope of this application.

FIG. 24 is a schematic structural diagram of an electronic device according to this application. A dashed line in FIG. 24 indicates that the unit or module is optional. The electronic device 800 may be configured to implement the methods described in the foregoing method embodiments.

The electronic device 800 includes one or more processors 801. The one or more processors 801 may support the electronic device 800 to implement the camera switching method in the method embodiments. The processor 801 may be a general-purpose processor, a dedicated processor, or the like. For example, the processor 801 may be a central processing unit (central processing unit, CPU), a digital signal processor (digital signal processor, DSP), an application specific integrated circuit (application specific integrated circuit, ASIC), a field programmable gate array (field programmable gate array, FPGA), or another programmable logic device such as a discrete gate, a transistor logic device, or a discrete hardware component.

The processor 801 may be configured to control the electronic device 800, execute a software program, process data of the software program, and the like. The electronic device 800 may further include a communication unit 805, which is configured to implement input (receiving) and output (sending) of a signal.

For example, the electronic device 800 may be a chip. The communication unit 805 may be an input and/or output circuit of the chip, or the communication unit 805 may be a communication interface of the chip. The chip may be a component of a terminal device or another electronic device.

For another example, the electronic device 800 may be a terminal device. The communication unit 805 may be a transceiver of the terminal device, or the communication unit 805 may be a transceiver circuit of the terminal device.

The electronic device 800 may include one or more memories 802, which store a program 804. The program 804 may be executed by the processor 801 to generate an instruction 803, so that the processor 801 performs the camera switching method described in the above method embodiments based on the instruction 803.

Optionally, the memory 802 may further store data.

Optionally, the processor 801 may further read the data stored in the memory 802, where the data may be stored at a same storage address as the program 804, or stored at a storage address different from a storage address of the program 804.

The processor 801 and the memory 802 may be arranged separately or integrated together, for example, integrated on a system on chip (system on chip, SOC) of the terminal device.

For example, the memory 802 may be configured to store a related program 804 of the display method provided in embodiments of this application, and the processor 801 may be configured to invoke the related program 804 of the display method stored in the memory 802, when performing the display method of the foldable electronic device, to perform the display method in embodiments of this application. For example, first data, second data, and information about a folding angle are obtained, where the first data is data of a first display screen acquired by a first motion sensor, the second data is data of a second display screen acquired by a second motion sensor, and the folding angle is an included angle between the first display screen and the second display screen; a first direction is obtained based on the first data, where the first direction is a direction of an interface displayed by the first display screen; a second direction is based on the second data, where the second direction is a direction of an interface displayed by the second display screen; a third direction is obtained based on the information about the folding angle, the first direction, and the second direction, where the third direction is a direction of each of the interfaces displayed by the first display screen and the second display screen; and the first display screen and/or the second display screen displays the interface based on the third direction.

Optionally, the processor 801 may be configured to execute each step/function in the embodiments shown in FIG. 8 to FIG. 13.

This application further provides a computer program product. The computer program product, when executed by a processor 801, implements the camera switching method in any method embodiment of this application.

The computer program product, such as a program 804, may be stored in a memory 802. The program 804 is subject to processing such as preprocessing, compilation, assembly, and linking, and is finally converted into an executable target document that may be executed by the processor 801.

This application further provides a computer-readable storage medium, which stores a computer program. The computer program, when executed by a computer, implements the camera switching method in any method embodiment of this application. The computer program may be a program in a high-level programming language, or may be an executable target program.

Optionally, the computer-readable storage medium is, for example, the memory 802. The memory 802 may be a volatile memory or a non-volatile memory, or the memory 802 may simultaneously include a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), used as an external cache. Through illustrative but not limited description, many forms of RAMs may be used, for example, a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM).

It is to be noted that, although the electronic device 800 shown in FIG. 24 shows only the memory, the processor, and the communication interface, in a specific implementation process, a person skilled in the art should understand that the electronic device 800 may further include another component that is essential for implementing normal running. In addition, according to a specific requirement, a person skilled in the art should understand that the electronic device 800 may further include a hardware component for implementing another additional function. In addition, a person skilled in the art should understand that the foregoing electronic device 800 may alternatively include only devices required to implement embodiments of this application, and does not need to include all devices shown in FIG. 24.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it is not to be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a ROM, a RAM, a magnetic disk, a compact disc, or the like.

The foregoing descriptions are merely specific implementations of this application, but are not intended to limit the protection scope of the invention, which is defined by the appended claims.

## Claims

1. A display method, performed by a foldable electronic device (100), wherein the foldable electronic device comprises a first display screen, a second display screen, a first motion sensor, and a second motion sensor, and the display method comprises:
obtaining (S310) first data, second data, and information about a folding angle, wherein the first data is data of the first display screen acquired by the first motion sensor, the second data is data of the second display screen acquired by the second motion sensor, and the folding angle is an included angle between the first display screen and the second display screen;
obtaining (S320) a first direction based on the first data, wherein the first direction is an arrangement direction of content information displayed in the first display screen;
obtaining (S330) a second direction based on the second data, wherein the second direction is an arrangement direction of content information displayed in the second display screen;
obtaining (S340) a third direction based on the information about the folding angle, the first direction, and the second direction, wherein the third direction is an arrangement direction that is of content information displayed in the first display screen and the second display screen; and
displaying, by the first display screen and the second display screen, the interfaces based on the third direction;
wherein the displaying, by the first display screen and the second display screen, the interfaces based on the third direction comprises: detecting a first operation on the first display screen, wherein the first operation is an operation for instructing the first display screen to enable screen rotation; displaying, by the first display screen in response to the first operation, the interface based on the third direction; detecting a second operation on the second display screen, wherein the second operation is an operation for instructing the second display screen to enable screen rotation; and displaying, by the second display screen in response to the second operation, the interface based on the third direction; or
wherein the displaying, by the first display screen and the second display screen, the interfaces based on the third direction comprises: detecting a third operation on the first display screen, wherein the third operation is an operation of instructing the first display screen and the second display screen to enable screen rotation; and displaying, by the first display screen and the second display screen in response to the third operation, the interfaces based on the third direction.

2. The display method according to claim 1, wherein the obtaining a third direction based on the information about the folding angle, the first direction, and the second direction comprises:
determining a current attitude of the foldable electronic device based on the information about the folding angle, wherein the current attitude is used for indicating a current unfolded state or folded state of the foldable electronic device; and
obtaining the third direction based on the current attitude, the first direction, and the second direction.

3. The display method according to claim 2, wherein the determining a current attitude of the foldable electronic device based on the information about the folding angle comprises:
determining that the current attitude is a folded attitude when the folding angle is less than or equal to a first preset threshold;
determining that the current attitude is an intermediate attitude when the folding angle is less than or equal to a second preset threshold, wherein the intermediate attitude is used for indicating an instantaneous attitude of the foldable electronic device, and the second preset threshold is greater than the first preset threshold; and
determining that the current attitude is a first unfolded attitude when the folding angle is in a first preset range and the first display screen is in a horizontal state.

4. The display method according to claim 3, wherein the folding angle is an included angle that is between the first display screen and the second display screen and that is obtained at a moment t, and the determining that the current attitude is a first unfolded attitude when the folding angle is in a first preset range and the first display screen is in a horizontal state comprises:
obtaining a first data set, wherein the first data frame set comprises the included angle that is between the first display screen and the second display screen and that is obtained at the moment t; and
determining that the current attitude is the first unfolded attitude when the included angle in the first data set is in the first preset range, and the first display screen is in the horizontal state.

5. The display method according to claim 3 or 4, further comprising:
determining that the current attitude is a second unfolded attitude when the folding angle is less than or equal to a third preset threshold, wherein the third preset threshold is greater than the first preset threshold and less than the second preset threshold.

6. The display method according to claim 5, wherein the folding angle is the included angle that is between the first display screen and the second display screen and that is obtained at the moment t, and the determining that the current attitude is a second unfolded attitude when the folding angle is less than or equal to a third preset threshold comprises:
obtaining a second data set, wherein the second data frame set comprises the included angle that is between the first display screen and the second display screen and that is obtained at the moment t; and
determining that the current attitude is the second unfolded attitude when the included angle in the second data set is less than or equal to the third preset threshold.

7. The display method according to any one of claims 3 to 6, wherein the first display screen is a primary display screen of the foldable electronic device, and when the current attitude is the folded attitude, the third direction is the same as the first direction.

8. The display method according to any one of claims 3 to 6, wherein the first data, the second data, and the information about the folding angle are data obtained at the moment t, and when the current attitude is the intermediate attitude, the third direction is a historical direction, wherein the historical direction is a direction that is of the interfaces displayed by the first display screen and the second display screen and that is obtained based on data obtained at a moment t-1.

9. The display method according to any one of claims 3 to 6, wherein the first display screen is a primary display screen of the foldable electronic device, and when the current attitude is the first unfolded attitude, the third direction is the same as the second direction.

10. The display method according to claim 5 or 6, wherein the first display screen is a primary display screen of the foldable electronic device, and when the current attitude is the second unfolded attitude, the third direction is the same as the second direction.

11. The display method according to any one of claims 3 to 10, further comprising:
when the folding angle is not in the first preset range, if a tag value of the first direction is greater than or equal to a tag value of the second direction, the third direction is the same as the first direction; or
if a tag value of the first direction is less than a tag value of the second direction, the third direction is the same as the second direction.

12. The display method according to any one of claims 1 to 11, further comprising:
storing the third direction.

13. A foldable electronic device (800), comprising:
a first display screen, a second display screen, a first motion sensor, and a second motion sensor,
one or more processors (801) and a memory (802), wherein
the memory is coupled to the one or more processors, the memory stores computer program code, the computer program code comprises computer instructions which, when executed by the one or more processors, cause the foldable electronic device to perform the display method according to any one of claims 1 to 12.

14. A computer-readable storage medium, storing a computer program, wherein the computer program, when executed by a processor of a foldable electronic device comprising a first display screen, a second display screen, a first motion sensor, and a second motion sensor, causes the foldable electronic device to perform the display method according to any one of claims 1 to 12.

## Patentansprüche

1. Anzeigeverfahren, das von einer faltbaren elektronischen Vorrichtung (100) durchgeführt wird, wobei die faltbare elektronische Vorrichtung einen ersten Anzeigebildschirm, einen zweiten Anzeigebildschirm, einen ersten Bewegungssensor und einen zweiten Bewegungssensor umfasst, und wobei das Anzeigeverfahren umfasst:
Erhalten (S310) von ersten Daten, zweiten Daten und Informationen über einen Faltwinkel, wobei die ersten Daten Daten des ersten Anzeigebildschirms sind, die durch den ersten Bewegungssensor erfasst werden, die zweiten Daten Daten des zweiten Anzeigebildschirms sind, die durch den zweiten Bewegungssensor erfasst werden, und der Faltwinkel ein eingeschlossener Winkel zwischen dem ersten Anzeigebildschirm und dem zweiten Anzeigebildschirm ist;
Erhalten (S320) einer ersten Richtung basierend auf den ersten Daten, wobei die erste Richtung eine Anordnungsrichtung von auf dem ersten Anzeigebildschirm angezeigten Inhaltsinformationen ist;
Erhalten (S330) einer zweiten Richtung basierend auf den zweiten Daten, wobei die zweite Richtung eine Anordnungsrichtung von auf dem zweiten Anzeigebildschirm angezeigten Inhaltsinformationen ist;
Erhalten (S340) einer dritten Richtung basierend auf den Informationen über den Faltwinkel, die erste Richtung und die zweite Richtung, wobei die dritte Richtung eine Anordnungsrichtung ist, die für auf dem ersten Anzeigebildschirm und dem zweiten Anzeigebildschirm angezeigte Inhaltsinformationen gilt; und
Anzeigen der Schnittstellen durch den ersten Anzeigebildschirm und den zweiten Anzeigebildschirm basierend auf der dritten Richtung;
wobei das Anzeigen der Schnittstellen durch den ersten Anzeigebildschirm und den zweiten Anzeigebildschirm basierend auf der dritten Richtung umfasst: Erkennen einer ersten Operation auf dem ersten Anzeigebildschirm, wobei die erste Operation eine Operation zum Anweisen des ersten Anzeigebildschirms ist, eine Bildschirmdrehung zu aktivieren; Anzeigen der Schnittstelle durch den ersten Anzeigebildschirm als Reaktion auf die erste Operation basierend auf der dritten Richtung; Erkennen einer zweiten Operation auf dem zweiten Anzeigebildschirm, wobei die zweite Operation eine Operation zum Anweisen des zweiten Anzeigebildschirms ist, eine Bildschirmdrehung zu aktivieren; und Anzeigen der Schnittstelle durch den zweiten Anzeigebildschirm als Reaktion auf die zweite Operation basierend auf der dritten Richtung; oder
wobei das Anzeigen der Schnittstellen durch den ersten Anzeigebildschirm und den zweiten Anzeigebildschirm basierend auf der dritten Richtung umfasst: Erkennen einer dritten Operation auf dem ersten Anzeigebildschirm, wobei die dritte Operation eine Operation zum Anweisen des ersten Anzeigebildschirms und des zweiten Anzeigebildschirms ist, eine Bildschirmdrehung zu aktivieren; und Anzeigen der Schnittstellen durch den ersten Anzeigebildschirm und den zweiten Anzeigebildschirm als Reaktion auf die dritte Operation basierend auf der dritten Richtung.

2. Anzeigeverfahren nach Anspruch 1, wobei das Ermitteln einer dritten Richtung basierend auf den Informationen über den Faltwinkel, die erste Richtung und die zweite Richtung Folgendes umfasst:
Bestimmen einer aktuellen Lage der faltbaren elektronischen Vorrichtung basierend auf den Informationen über den Faltwinkel, wobei die aktuelle Lage dazu dient, einen aktuellen aufgeklappten Zustand oder einen zusammengeklappten Zustand der faltbaren elektronischen Vorrichtung anzugeben; und
Ermitteln der dritten Richtung basierend auf der aktuellen Lage, der ersten Richtung und der zweiten Richtung.

3. Anzeigeverfahren nach Anspruch 2, wobei das Bestimmen einer aktuellen Lage der faltbaren elektronischen Vorrichtung basierend auf den Informationen über den Faltwinkel Folgendes umfasst:
Bestimmen, dass die aktuelle Lage eine zusammengeklappte Lage ist, wenn der Faltwinkel kleiner oder gleich einem ersten voreingestellten Schwellenwert ist;
Bestimmen, dass die aktuelle Lage eine Zwischenlage ist, wenn der Faltwinkel kleiner oder gleich einem zweiten voreingestellten Schwellenwert ist, wobei die Zwischenlage dazu dient, eine momentane Lage der faltbaren elektronischen Vorrichtung anzugeben, und der zweite voreingestellte Schwellenwert größer als der erste voreingestellte Schwellenwert ist; und
Bestimmen, dass die aktuelle Lage eine erste aufgeklappte Lage ist, wenn der Faltwinkel in einem ersten voreingestellten Bereich liegt und sich der erste Anzeigebildschirm in einem horizontalen Zustand befindet.

4. Anzeigeverfahren nach Anspruch 3, wobei der Faltwinkel ein eingeschlossener Winkel ist, der sich zwischen dem ersten Anzeigebildschirm und dem zweiten Anzeigebildschirm befindet und der zu einem Zeitpunkt t ermittelt wird, und das Bestimmen, dass die aktuelle Lage eine erste aufgeklappte Lage ist, wenn der Faltwinkel in einem ersten voreingestellten Bereich liegt und sich der erste Anzeigebildschirm in einem horizontalen Zustand befindet, Folgendes umfasst:
Erhalten eines ersten Datensatzes, wobei der erste Datensatz den eingeschlossenen Winkel umfasst, der sich zwischen dem ersten Anzeigebildschirm und dem zweiten Anzeigebildschirm befindet und der zum Zeitpunkt t ermittelt wird; und
Bestimmen, dass die aktuelle Lage die erste aufgeklappte Lage ist, wenn der eingeschlossene Winkel im ersten Datensatz in dem ersten voreingestellten Bereich liegt und sich der erste Anzeigebildschirm in dem horizontalen Zustand befindet.

5. Anzeigeverfahren nach Anspruch 3 oder 4, ferner umfassend:
Bestimmen, dass die aktuelle Lage eine zweite aufgeklappte Lage ist, wenn der Faltwinkel kleiner oder gleich einem dritten voreingestellten Schwellenwert ist, wobei der dritte voreingestellte Schwellenwert größer als der erste voreingestellte Schwellenwert und kleiner als der zweite voreingestellte Schwellenwert ist.

6. Anzeigeverfahren nach Anspruch 5, wobei der Faltwinkel der zwischen dem ersten Anzeigebildschirm und dem zweiten Anzeigebildschirm eingeschlossene Winkel ist, der zum Zeitpunkt t ermittelt wird, und das Bestimmen, dass die aktuelle Ausrichtung eine zweite aufgeklappte Ausrichtung ist, wenn der Faltwinkel kleiner oder gleich einem dritten voreingestellten Schwellenwert ist, umfasst:
Ermitteln eines zweiten Datensatzes, wobei der zweite Datenrahmensatz den zwischen dem ersten Anzeigebildschirm und dem zweiten Anzeigebildschirm eingeschlossenen Winkel umfasst, der zum Zeitpunkt t ermittelt wird; und
Bestimmen, dass die aktuelle Ausrichtung die zweite aufgeklappte Ausrichtung ist, wenn der Winkel im zweiten Datensatz kleiner oder gleich dem dritten voreingestellten Schwellenwert ist.

7. Anzeigeverfahren nach einem der Ansprüche 3 bis 6, wobei der erste Anzeigebildschirm ein primärer Anzeigebildschirm der faltbaren elektronischen Vorrichtung ist und, wenn die aktuelle Ausrichtung die gefaltete Ausrichtung ist, die dritte Richtung dieselbe wie die erste Richtung ist.

8. Anzeigeverfahren nach einem der Ansprüche 3 bis 6, wobei die ersten Daten, die zweiten Daten und die Informationen über den Faltwinkel Daten sind, die zum Zeitpunkt t ermittelt werden, und wenn die aktuelle Ausrichtung die Zwischenausrichtung ist, die dritte Richtung eine historische Richtung ist, wobei die historische Richtung eine Richtung der auf dem ersten Anzeigebildschirm und dem zweiten Anzeigebildschirm angezeigten Schnittstellen ist, die basierend auf Daten ermittelt wird, die zu einem Zeitpunkt t-1 erhalten wurden.

9. Anzeigeverfahren nach einem der Ansprüche 3 bis 6, wobei der erste Anzeigebildschirm ein primärer Anzeigebildschirm der faltbaren elektronischen Vorrichtung ist und, wenn die aktuelle Ausrichtung die erste aufgeklappte Ausrichtung ist, die dritte Richtung dieselbe wie die zweite Richtung ist.

10. Anzeigeverfahren nach Anspruch 5 oder 6, wobei der erste Anzeigebildschirm ein primärer Anzeigebildschirm der faltbaren elektronischen Vorrichtung ist und, wenn die aktuelle Ausrichtung die zweite aufgeklappte Ausrichtung ist, die dritte Richtung dieselbe wie die zweite Richtung ist.

11. Anzeigeverfahren nach einem der Ansprüche 3 bis 10, ferner umfassend:
wenn der Faltwinkel nicht im ersten voreingestellten Bereich liegt, falls ein Tag-Wert der ersten Richtung größer oder gleich einem Tag-Wert der zweiten Richtung ist, die dritte Richtung dieselbe wie die erste Richtung ist; oder
falls ein Tag-Wert der ersten Richtung kleiner als ein Tag-Wert der zweiten Richtung ist, die dritte Richtung dieselbe wie die zweite Richtung ist.

12. Anzeigeverfahren nach einem der Ansprüche 1 bis 11, ferner umfassend:
Speichern der dritten Richtung.

13. Faltbare elektronische Vorrichtung (800), umfassend:
ein erster Anzeigebildschirm, ein zweiter Anzeigebildschirm, ein erster Bewegungssensor und ein zweiter Bewegungssensor, ein oder mehrere Prozessoren (801) und ein Speicher (802), wobei
der Speicher mit dem einen oder den mehreren Prozessoren gekoppelt ist, der Speicher einen Computerprogrammcode speichert, wobei der Computerprogrammcode Computeranweisungen umfasst, die, wenn sie von dem einen oder den mehreren Prozessoren ausgeführt werden, das faltbare elektronische Gerät dazu veranlassen, das Anzeigeverfahren gemäß einem der Ansprüche 1 bis 12 durchzuführen.

14. Computerlesbares Speichermedium, das ein Computerprogramm speichert, wobei das Computerprogramm, wenn es von einem Prozessor eines faltbaren elektronischen Geräts ausgeführt wird, das einen ersten Anzeigebildschirm, einen zweiten Anzeigebildschirm, einen ersten Bewegungssensor und einen zweiten Bewegungssensor umfasst, das faltbare elektronische Gerät dazu veranlasst, das Anzeigeverfahren gemäß einem der Ansprüche 1 bis 12 durchzuführen.

## Revendications

1. Un procédé d'affichage, exécuté par un dispositif électronique pliable (100), dans lequel le dispositif électronique pliable comprend un premier écran d'affichage, un deuxième écran d'affichage, un premier capteur de mouvement et un deuxième capteur de mouvement, et le procédé d'affichage comprend :
l'obtention (S310) de premières données, de deuxièmes données et d'informations concernant un angle de pliage, dans lequel les premières données sont des données du premier écran d'affichage acquises par le premier capteur de mouvement, les deuxièmes données sont des données du deuxième écran d'affichage acquises par le deuxième capteur de mouvement, et l'angle de pliage est un angle inclus entre le premier écran d'affichage et le deuxième écran d'affichage ;
l'obtention (S320) d'une première direction basée sur les premières données, dans lequel la première direction est une direction d'agencement des informations de contenu affichées sur le premier écran d'affichage ;
l'obtention (S330) d'une deuxième direction basée sur les deuxièmes données, dans lequel la deuxième direction est une direction d'agencement des informations de contenu affichées sur le deuxième écran d'affichage ;
l'obtention (S340) d'une troisième direction basée sur les informations concernant l'angle de pliage, la première direction et la deuxième direction, dans lequel la troisième direction est une direction d'agencement qui est celle des informations de contenu affichées sur le premier écran d'affichage et le deuxième écran d'affichage ; et
l'affichage, par le premier écran d'affichage et le deuxième écran d'affichage, des interfaces basées sur la troisième direction ;
dans lequel l'affichage, par le premier écran d'affichage et le deuxième écran d'affichage, des interfaces basées sur la troisième direction comprend : la détection d'une première opération sur le premier écran d'affichage, dans lequel la première opération est une opération pour ordonner au premier écran d'affichage d'activer la rotation d'écran ; l'affichage, par le premier écran d'affichage en réponse à la première opération, de l'interface basée sur la troisième direction ; la détection d'une deuxième opération sur le deuxième écran d'affichage, dans lequel la deuxième opération est une opération pour ordonner au deuxième écran d'affichage d'activer la rotation d'écran ; et l'affichage, par le deuxième écran d'affichage en réponse à la deuxième opération, de l'interface basée sur la troisième direction ; ou
dans lequel l'affichage, par le premier écran d'affichage et le deuxième écran d'affichage, des interfaces basées sur la troisième direction comprend : la détection d'une troisième opération sur le premier écran d'affichage, dans lequel la troisième opération est une opération consistant à ordonner au premier écran d'affichage et au deuxième écran d'affichage d'activer la rotation d'écran ; et l'affichage, par le premier écran d'affichage et le deuxième écran d'affichage en réponse à la troisième opération, des interfaces basées sur la troisième direction.

2. Procédé d'affichage selon la revendication 1, dans lequel l'obtention d'une troisième direction sur la base des informations concernant l'angle de pliage, la première direction et la seconde direction comprend :
la détermination d'une attitude actuelle du dispositif électronique pliable sur la base des informations concernant l'angle de pliage, dans lequel l'attitude actuelle est utilisée pour indiquer un état déplié ou un état plié actuel du dispositif électronique pliable ; et
l'obtention de la troisième direction sur la base de l'attitude actuelle, de la première direction et de la seconde direction.

3. Procédé d'affichage selon la revendication 2, dans lequel la détermination d'une attitude actuelle du dispositif électronique pliable sur la base des informations concernant l'angle de pliage comprend :
la détermination que l'attitude actuelle est une attitude pliée lorsque l'angle de pliage est inférieur ou égal à un premier seuil prédéfini ;
la détermination que l'attitude actuelle est une attitude intermédiaire lorsque l'angle de pliage est inférieur ou égal à un second seuil prédéfini, dans lequel l'attitude intermédiaire est utilisée pour indiquer une attitude instantanée du dispositif électronique pliable, et le second seuil prédéfini est supérieur au premier seuil prédéfini ; et
la détermination que l'attitude actuelle est une première attitude dépliée lorsque l'angle de pliage se situe dans une première plage prédéfinie et que le premier écran d'affichage est dans un état horizontal.

4. Procédé d'affichage selon la revendication 3, dans lequel l'angle de pliage est un angle inclus entre le premier écran d'affichage et le second écran d'affichage et qui est obtenu à un instant t, et la détermination que l'attitude actuelle est une première attitude dépliée lorsque l'angle de pliage se situe dans une première plage prédéfinie et que le premier écran d'affichage est dans un état horizontal comprend :
l'obtention d'un premier ensemble de données, dans lequel le premier ensemble de trames de données comprend l'angle inclus entre le premier écran d'affichage et le second écran d'affichage et qui est obtenu à l'instant t ; et
la détermination que l'attitude actuelle est la première attitude dépliée lorsque l'angle inclus dans le premier ensemble de données se situe dans la première plage prédéfinie, et que le premier écran d'affichage est dans l'état horizontal.

5. Procédé d'affichage selon la revendication 3 ou 4, comprenant en outre :
la détermination que l'attitude actuelle est une seconde attitude dépliée lorsque l'angle de pliage est inférieur ou égal à un troisième seuil prédéfini, dans lequel le troisième seuil prédéfini est supérieur au premier seuil prédéfini et inférieur au second seuil prédéfini.

6. Procédé d'affichage selon la revendication 5, dans lequel l'angle de pliage est l'angle inclus entre le premier écran d'affichage et le second écran d'affichage et qui est obtenu au moment t, et la détermination que l'attitude actuelle est une seconde attitude dépliée lorsque l'angle de pliage est inférieur ou égal à un troisième seuil prédéfini comprend :
l'obtention d'un second ensemble de données, dans lequel le second ensemble de trames de données comprend l'angle inclus entre le premier écran d'affichage et le second écran d'affichage et qui est obtenu au moment t ; et
la détermination que l'attitude actuelle est la seconde attitude dépliée lorsque l'angle inclus dans le second ensemble de données est inférieur ou égal au troisième seuil prédéfini.

7. Procédé d'affichage selon l'une quelconque des revendications 3 à 6, dans lequel le premier écran d'affichage est un écran d'affichage principal du dispositif électronique pliable, et lorsque l'attitude actuelle est l'attitude pliée, la troisième direction est identique à la première direction.

8. Procédé d'affichage selon l'une quelconque des revendications 3 à 6, dans lequel les premières données, les secondes données et les informations concernant l'angle de pliage sont des données obtenues au moment t, et lorsque l'attitude actuelle est l'attitude intermédiaire, la troisième direction est une direction historique, dans lequel la direction historique est une direction qui est celle des interfaces affichées par le premier écran d'affichage et le second écran d'affichage et qui est obtenue sur la base de données obtenues à un moment t-1.

9. Procédé d'affichage selon l'une quelconque des revendications 3 à 6, dans lequel le premier écran d'affichage est un écran d'affichage principal du dispositif électronique pliable, et lorsque l'attitude actuelle est la première attitude dépliée, la troisième direction est identique à la seconde direction.

10. Procédé d'affichage selon la revendication 5 ou 6, dans lequel le premier écran d'affichage est un écran d'affichage principal du dispositif électronique pliable, et lorsque l'attitude actuelle est la seconde attitude dépliée, la troisième direction est identique à la seconde direction.

11. Procédé d'affichage selon l'une quelconque des revendications 3 à 10, comprenant en outre :
lorsque l'angle de pliage n'est pas dans la première plage prédéfinie, si une valeur d'étiquette de la première direction est supérieure ou égale à une valeur d'étiquette de la seconde direction, la troisième direction est identique à la première direction ; ou
si une valeur d'étiquette de la première direction est inférieure à une valeur d'étiquette de la seconde direction, la troisième direction est identique à la seconde direction.

12. Procédé d'affichage selon l'une quelconque des revendications 1 à 11, comprenant en outre :
le stockage de la troisième direction.

13. Dispositif électronique pliable (800), comprenant :
un premier écran d'affichage, un second écran d'affichage, un premier capteur de mouvement et un second capteur de mouvement, un ou plusieurs processeurs (801) et une mémoire (802), dans lequel
la mémoire est couplée à un ou plusieurs processeurs, la mémoire stocke un code de programme informatique, le code de programme informatique comprend des instructions informatiques qui, lorsqu'elles sont exécutées par le ou les processeurs, amènent le dispositif électronique pliable à effectuer le procédé d'affichage selon l'une quelconque des revendications 1 à 12.

14. Support de stockage lisible par ordinateur, stockant un programme informatique, dans lequel le programme informatique, lorsqu'il est exécuté par un processeur d'un dispositif é lectronique pliable comprenant un premier é cran d'affichage, un second écran d'affichage, un premier capteur de mouvement et un second capteur de mouvement, amène le dispositif électronique pliable à effectuer le procédé d'affichage selon l'une quelconque des revendications 1 à 12.
